# EUROPEAN PATENT SPECIFICATION

(11) **EP 4 529 281 B1**
(45) Date of publication and mention of the grant of the patent: **25.11.2026**
(21) Application number: 23829816.0
(22) Date of filing: 29.05.2023
(51) Int. Cl.: H04W 48/08, H04W 8/00

(54) **NETWORK ACCESS METHOD AND COMMUNICATION APPARATUS**
NETZWERKZUGANGSVERFAHREN UND KOMMUNIKATIONSVORRICHTUNG
PROCÉDÉ D'ACCÈS AU RÉSEAU ET APPAREIL DE COMMUNICATION

(30) Priority: 30.06.2022 CN 202210756958; 13.10.2022 CN 202211252846
(43) Date of publication of application: 26.03.2025
(73) Proprietor: Huawei Technologies Co., Ltd., Shenzhen, Guangdong 518129 (CN)
(72) Inventor: MA, Chunyan, Shenzhen, Guangdong 518129 (CN); DING, Hui, Shenzhen, Guangdong 518129 (CN); ZONG, Zaifeng, Shenzhen, Guangdong 518129 (CN); LIU, Jiaqi, Shenzhen, Guangdong 518129 (CN)
(74) Representative: Goddar, Heinz J.
(86) International application number: PCT/CN2023/096730
(87) International publication number: WO 2024/001631

(56) References cited:
- WO-A1-2019/219671
- WO-A1-2021/227627
- CN-A- 108 024 314
- CN-A- 113 950 141
- CN-A- 114 390 667
- KR-A- 20210 079 048
- US-A1- 2020 344 678
- US-A1- 2023 069 252
- US-B2- 11 356 940
- SAMSUNG: "Changes to registration procedures due to IE restrictions in initial NAS message", 3GPP DRAFT; S2-1810333 REGISTRATION UPDATE FOR IE RESTRICTION IN INITIAL NAS MESSAGE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Dongguan, P.R. China; 20181015 - 20181019, 9 October 2018 (2018-10-09), Mobile Competence Centre ; 650, route des Lucioles ; F-06921 Sophia-Antipolis Cedex ; France , XP051539319

## Description

### TECHNICAL FIELD

Embodiments of this application relate to the field of wireless communication technologies, and more specifically, to a network access method and a communication apparatus.

### BACKGROUND

In some communication scenarios, to support providing network services for both a public network subscriber and a dedicated network subscriber, an operator may deploy a shared base station for a public network and a dedicated network, so that the public network subscriber can access the public network through the shared base station, and the dedicated network subscriber can access the dedicated network through the shared base station. In another scenario, the operator may alternatively deploy an independent base station for each of the public network and the dedicated network. A public network base station supports the public network subscriber in accessing the public network through the public network base station, and a dedicated network base station supports the dedicated network subscriber in accessing the dedicated network through the dedicated network base station.

It is known that, in a process in which a terminal device accesses a core network through an access network (access network, AN), the AN first needs to select an access and mobility management function (access and mobility management function, AMF), and finally registers the terminal device with the core network via the AMF, to complete the access. According to a current communication protocol, the AN selects an initial AMF mainly based on a public land mobile network identifier (public land mobile network identifier, PLMN ID), a location of a user equipment (user equipment, UE), a network slice list requested by the UE, and a local operator policy. However, in the foregoing information, the PLMN ID, the location of the UE, and the local operator policy temporarily cannot support the AN in distinguishing between a public network subscriber and a dedicated network subscriber. In addition, network slice support capabilities of UEs on a live network vary, and some UEs do not have a capability of carrying network slice information. As a result, the AN cannot select correct core networks for the dedicated network subscriber and the public network subscriber. For example, the AN may select a public network AMF to provide a network service for a campus subscriber, or may select a dedicated network AMF to provide a network service for a public network subscriber.

In addition, in the scenario in which independent base stations are used for the public network and the dedicated network, because existing cell broadcast information cannot support the UE in selecting a correct access network, the UE cannot access a correct network to initiate a service.

In the foregoing communication scenario in which the public network and the dedicated network share the base station or the independent base stations are used for the public network and the dedicated network, there is currently no solution of how to select a suitable (or correct) core network for a terminal device.

WO 2019/219671 A1 describes a method for core resource distribution from a 5G network. The method involves communication between a 5G enabled user device, an eNB, an AMF, and an MME. The 5G enabled user device sends a registration request to the AMF. The AMF decides to reroute the user device to the EPC. The AMF sends a registration rejection to the 5G enabled user device, with the rejection cause being the need to register in the EPC. The 5G enabled user device then sends an attachment request to the MME. If it is decided to offload the user device to the EPC (4G), then the AMF rejects the user device's registration request. Along with the rejection is included a cause, which indicates that the user device must perform an attach procedure in the EPC. After such indication, the user device performs the attach procedure with the EPC along with a 4G parameter.
WO 2021/227627 A1 describes a communication method wherein a first network device receives a first message, the first message comprising the identifier of a terminal device. The first network device determines first network selection information, the first network selection information comprising at least one of information of a standalone non-public network (SNPN) allowing access of the terminal device and information indicating whether to allow the terminal device to access a public land mobile network (PLMN). The first network device sends a second message, the second message comprising the first network selection information.
US 2020/344678 A1 describes methods for indicating a network for a remote unit. A method includes transmitting a first message including a first registration request from a remote unit. The first message includes a discovery indication indicating that the remote unit is attempting to discover a network configured for use by the remote unit. In response to transmitting the first message, a second message is received including a list of networks configured for use by the remote unit. A third message is transmitted including a second registration request from the remote unit. The second registration request includes an indication of a network selected from the list of networks configured for use by the remote unit.
US 11 356 940 B2 describes methods related to mobility with consideration for network slicing. A user equipment (UE) transmits in a first cell frequency of a network, a request for a network slice of the network that is not provided by the first cell frequency. The UE receives, in response to the request, an information for communicating in a second cell frequency of the network that provides the requested network slice. In one embodiment, a core network entity receives, from a base station (BS) operating over a first cell frequency of a network, a request to provide a network slice of the network to a UE, wherein the network slice not provided by the first cell frequency. The core network entity transmits, to the BS, information associated with a second cell frequency of the network providing the network slice.

### SUMMARY

This application provides a network access method and a communication apparatus, to support access of a terminal device to a suitable core network in a communication scenario in which a shared base station is deployed for a public core network and a dedicated core network, or in a communication scenario in which an independent base station is deployed for each of a public core network and a dedicated core network.
The invention is defined by the independent claims. Advantageous embodiments of the invention are given by the dependent claims.

According to a first aspect, a network access method is provided. The method includes:

A first AMF receives a first message from an access network device, where the first message includes a registration request of a terminal device, and the first AMF belongs to a first core network.

The first AMF sends a rerouting request message to the access network device based on the first message, where the rerouting request message includes first indication information, and the first indication information indicates the access network device to reroute the registration request to a second core network.

The first core network and the second core network share the access network device.

In this technical solution, the first core network and the second core network share the access network device, indicating that the access network device can enable a UE of the first core network and a UE of the second core network to access the respective corresponding core networks. In other words, the UE of the first core network and the UE of the second core network access the core networks through the same access network device.

Based on the foregoing technical solution, when the first AMF in the first core network receives a registration request of a UE, if the first AMF determines that the UE is suitable for accessing the second core network, the first AMF indicates the access network device to perform rerouting. The first AMF includes the first indication information in the rerouting request message, so that the access network device determines to reroute the registration request of the UE to the second core network, to enable the UE to access a suitable core network.

For example, one of the first core network and the second core network is a public network, and the other is a dedicated network. This is not limited. It can be learned that, if the access network device selects a dedicated network AMF for a dedicated network subscriber suitable for accessing a public network or selects a public network AMF for a dedicated network subscriber suitable for accessing a dedicated network, or in another similar communication scenario, rerouting to a correct core network can be implemented by using this technical solution.

With reference to the first aspect, in some implementations of the first aspect, the first indication information includes one or more of the following:
an identifier of the second core network;
an identifier of a network slice of the second core network; and
an AMF set identifier, where the AMF set identifier is used by the access network device to determine the second core network.

With reference to the first aspect, in some implementations of the first aspect, the first message includes an identifier of the terminal device and one or more of the following:
location information of the terminal device, where the location information includes information about a tracking area TA and/or information about a cell on which the terminal device camps; and
an identifier of a network slice requested by the terminal device.

In this implementation, in addition to the identifier of the UE, the first message sent by the access network device to the first AMF may further include the location information of the UE and/or the identifier of the network slice requested by the UE. The information may be used as a reference when the first AMF determines whether the UE is suitable for accessing the first core network, to improve accuracy of decision-making, so that the UE accesses a more suitable core network.

With reference to the first aspect, in some implementations of the first aspect, that the first AMF sends the rerouting request message to the access network device based on the first message includes:

The first AMF sends the rerouting request message to the access network device when the first AMF determines, based on the identifier of the terminal device, that the first core network does not store subscription data of the terminal device.

In this implementation, if the first AMF determines, based on the identifier of the UE, that the first core network does not store the subscription data of the UE, it indicates that the UE is not registered in the first core network, and the UE can access only another core network (namely, the second core network), to indicate the RAN to perform rerouting.

For example, if a campus subscriber is not registered with a public network, and the first AMF finds, by using the identifier of the UE, that the public network does not store subscription data of the campus UE, the first AMF determines that the UE may be a campus UE, and indicates the RAN to reroute a registration request of the UE to an AMF in a campus network.

With reference to the first aspect, in some implementations of the first aspect, that the first AMF sends the rerouting request message to the access network device based on the first message includes:

The first AMF determines, based on the identifier of the terminal device, that the first core network stores subscription data of the terminal device, where the subscription data includes category information of the terminal device, and the category information indicates that the terminal device is of a public network subscriber category or a dedicated network subscriber category.

The first AMF sends the rerouting request message to the access network device when determining, based on the category information of the terminal device included in the subscription data, that the terminal device is not of a subscriber category of the first core network.

In this implementation, the first AMF determines, based on the identifier of the UE, that the first core network stores the subscription data of the UE, the subscription data carries the category information of the UE, and the category information may indicate that the UE is a public network subscriber or a dedicated network subscriber. For example, the first core network is a public network. If a category of the UE indicates that the UE is a dedicated network subscriber, it is directly determined that the UE is suitable for accessing a dedicated network, and the rerouting request message is sent to the access network device. This implementation can support the first AMF in deciding whether to accept access of the UE to the first core network.

With reference to the first aspect, in some implementations of the first aspect, the first message includes the identifier of the terminal device and the location information of the terminal device.

That the first AMF sends the rerouting request message to the access network device based on the first message includes:

The first AMF determines, based on the identifier of the terminal device, that the first core network stores subscription data of the terminal device.

The first AMF sends the rerouting request message to the access network device when the first AMF determines, based on the location information of the terminal device, that the TA in the location information of the terminal device is within a TA range of the second core network or the cell in the location information is within a cell range of the second core network.

In this implementation, the first AMF determines, based on the identifier of the UE, that the first core network stores the subscription data of the UE, indicating that the UE is registered with the first core network. If the location information of the UE indicates that the UE currently performs access in the area range corresponding to the second core network, the first AMF determines that the UE is suitable for accessing the second core network. For example, in a scenario in which a campus subscriber registers with a public network and initiates a registration procedure within a campus range, this implementation can improve accuracy of access decision-making.

With reference to the first aspect, in some implementations of the first aspect, the first message includes the identifier of the terminal device and the identifier of the network slice requested by the terminal device.

That the first AMF sends the rerouting request message to the access network device based on the first message includes:

The first AMF determines, based on the identifier of the terminal device, that the first core network stores subscription data of the terminal device.

The first AMF sends the rerouting request message to the access network device when the first AMF determines, based on the identifier of the network slice requested by the terminal device, that the network slice is provided by the second core network.

In this implementation, the first AMF determines, based on the identifier of the UE, that the first core network stores the subscription data of the UE, indicating that the UE is registered with the first core network. In this case, the first AMF performs UE access decision-making with reference to the network slice requested by the UE. For example, if a campus subscriber registers with a public network, and a network slice identified by an identifier of the network slice is provided by a campus network, a public network AMF determines that the campus subscriber is suitable for accessing the campus network. However, if the campus subscriber is registered with the public network, but the network slice identified by the identifier of the network slice is provided by a public network, the public network AMF determines that the campus subscriber is suitable for accessing the public network. It can be learned that, this implementation can improve accuracy of access decision-making.

With reference to the first aspect, in some implementations of the first aspect, the first AMF is further configured with one or more of a subscriber list of the second core network, a tracking area identifier TAI list of the second core network, and a new radio cell global identifier NCGI list of the second core network.

In this implementation, the first AMF is locally configured with related information of the second core network, for example, one or more of the subscriber list (for example, a subscriber identifier trustlist), the TAI list, or the NCGI list of the second core network. Based on this, the first AMF can directly determine whether the UE is a subscriber of the second core network, or whether the UE is located in the area range of the second core network. This improves efficiency of decision-making of the first AMF.

With reference to the first aspect, in some implementations of the first aspect, the first AMF is configured with the subscriber list of the second core network.

That the first AMF sends the rerouting request message to the access network device based on the first message includes:

The first AMF sends the rerouting request message to the access network device when determining, based on the identifier of the terminal device and the subscriber list of the second core network, that the terminal device is a subscriber of the second core network.

In this implementation, because the first AMF is locally configured with the subscriber list of the second core network, the first AMF can directly determine, based on the identifier of the UE, whether the UE is a subscriber of the second core network, and if yes, directly indicate the RAN to perform rerouting, so that efficiency of decision-making of the first AMF can be improved.

With reference to the first aspect, in some implementations of the first aspect, the first message includes the identifier of the terminal device and the location information of the terminal device, and the first AMF is configured with the subscriber list of the second core network and the TAI list of the second core network.

That the first AMF sends the rerouting request message to the access network device based on the first message includes:

The first AMF determines, based on the identifier of the terminal device, that the first core network stores subscription data of the terminal device, and determines, based on the identifier of the terminal device and the subscriber list of the second core network, that the terminal device is a subscriber of the second core network.

When the TA in the location information of the terminal device is included in the TAI list of the second core network, the first AMF sends the rerouting request message to the access network device.

In this implementation, the first AMF determines, based on the identifier of the UE, that the first core network stores the subscription data of the UE, that is, the UE is registered with the first core network. Therefore, the UE can access the first core network. In addition, because the first AMF is locally configured with the subscriber list of the second core network, the first AMF directly determines, based on the identifier of the UE, that the UE is a subscriber of the second core network. Based on this, to improve accuracy of decision-making, the first AMF may make a decision with reference to a current location of the UE. If the UE is currently located in the area range corresponding to the second core network, the first AMF determines that the UE is suitable for accessing the second core network.

With reference to the first aspect, in some implementations of the first aspect, the first message includes the identifier of the terminal device and the location information of the terminal device, and the first AMF is configured with the TAI list of the second core network and/or the NCGI list of the second core network.

That the first AMF sends the rerouting request message to the access network device based on the first message includes:

The first AMF determines, based on the identifier of the terminal device, that the first core network does not store subscription data of the terminal device; and the first AMF sends the rerouting request message to the access network device when the TA in the location information of the terminal device is included in the TAI list of the second core network, or the cell in the location information of the terminal device is included in the NCGI list of the second core network.

In this implementation, the first AMF determines, based on the identifier of the UE, that the first core network does not store the subscription data of the UE, that is, the UE is not registered with the first core network. In addition, because the first AMF is locally configured with a location list related to the second core network, the first AMF can determine, based on the location information of the UE, that the UE is currently located in a related area range of the second core network. In this case, the first AMF determines that the UE is suitable for accessing the second core network.

With reference to the first aspect, in some implementations of the first aspect, that the first AMF sends the rerouting request message to the access network device based on the first message includes:

The first AMF sends an access policy request message to an AM PCF based on the first message, where the access policy request message is used to request to obtain a decision of accessing a network by the terminal device.

The first AMF receives an access policy response message from the AM PCF, where the access decision response message indicates to enable the terminal device to access the second core network.

The first AMF sends the rerouting request message to the access network device based on the access policy response message.

In this implementation, the first AMF requests, based on the first message, the AM PCF to perform the decision of accessing the network by the UE. When the AM PCF determines that the second core network needs to provide a service for the UE, the first AMF sends the rerouting request message to the access network device, to reroute the registration request of the UE to the second core network.

With reference to the first aspect, in some implementations of the first aspect, the access policy response message carries one or more of the following information:
the identifier of the second core network;
the identifier of the network slice of the second core network;
the access and mobility management function network element set identifier, where the access and mobility management function network element set identifier is used by the access network device to determine the second core network;
a reject cause value, where the reject cause value indicates the terminal device to search for a cell in a TA other than the current TA to attempt to access a network; and
updated network slice information, where the updated network slice information includes information about the network slice of the second core network.

With reference to the first aspect, in some implementations of the first aspect, the identifier of the terminal device includes a subscription concealed identifier SUCI, the SUCI includes a routing identifier RI and a home network public key identifier HNPK ID, the RI and/or the HNPK ID indicate/indicates a category of the terminal device, and the category of the terminal device indicates that the terminal device is of the public network subscriber category or the dedicated network subscriber category.

In this implementation, if the UE includes the SUCI in the registration request, and distinguishes between a public network subscriber and a campus subscriber by using the RI and/or the HNPK ID in the SUCI, the first AMF can determine the category of the UE based on the SUCI in the registration request. This not only improves determining accuracy, but also improves efficiency of decision-making of the AMF.

With reference to the first aspect, in some implementations of the first aspect, the subscriber list of the second core network includes a number segment of a subscriber of the second core network, and the number segment of the subscriber includes one or more of the following: a globally unique subscription permanent identifier (subscription permanent identifier, SUPI) number segment, an international mobile subscriber identifier (international mobile subscriber identifier, IMSI) number segment, a routing identifier (routing identifier, RI) number segment in a global subscription concealed identifier (subscription concealed identifier, SUCI), or a home network public key identifier (home network identifier, HNPK ID) number segment in the SUCI.

With reference to the first aspect, in some implementations of the first aspect, one of the first core network and the second core network is a public core network, and the other is a dedicated core network. For example, the first core network is a public core network, and the second core network is a dedicated core network; or the second core network is a dedicated core network, and the first core network is a public core network.

It should be noted that, in various specific implementations in which the first AMF sends the rerouting request message to the access network device based on the first message in the first aspect, if the access network device is replaced with a "terminal device" and the rerouting request message is replaced with a "second message", the method is fully applicable to a method in a third aspect. In other words, in the first aspect, the first AMF performs access decision-making based on the first message, and sends the rerouting request message to the access network device when determining to reject access of the UE to the first core network. However, in the third aspect, the first AMF performs access decision-making based on the first message, and sends the second message to the terminal device when determining to reject access of the UE to the first core network. A specific implementation in which the first AMF performs access decision-making and determines to reject access of the UE to the first core network in the first aspect is also fully applicable to the third aspect. To avoid repetition, a specific implementation in which the first AMF determines to reject access of the UE to the first core network is not described in detail in the third aspect.

### BRIEF DESCRIPTION OF DRAWINGS

FIG. 1 is a diagram of a communication scenario applicable to technical solutions of this application;
FIG. 2 is a diagram of a network architecture applicable to an embodiment of this application;
FIG. 3 is a schematic flowchart of a network access method according to this application;
FIG. 4 is a diagram of a structure of an SUCI;
FIG. 5 is another schematic flowchart of a network access method according to this application;
FIG. 6 is a schematic flowchart of a network access method according to this application;
FIG. 7 shows an example of a network access method according to this application;
FIG. 8 shows an example of a network access method according to this application;
FIG. 9 shows an example of a network access method according to this application;
FIG. 10 shows an example of a network access method according to this application;
FIG. 11 shows an example of a network access method according to this application;
FIG. 12 is a block diagram of a communication apparatus according to this application; and
FIG. 13 is a diagram of a structure of a communication apparatus according to this application.

### DESCRIPTION OF EMBODIMENTS

The following describes technical solutions in embodiments of this application with reference to the accompanying drawings.

For ease of understanding, related concepts or technologies in this application are first briefly described.

The technical solutions provided in this application may be applied to various communication systems, including but not limited to a 5th generation (5th generation, 5G) system, a new radio (new radio, NR) system, a long term evolution (long term evolution, LTE) system, an LTE frequency division duplex (frequency division duplex, FDD) system, an LTE time division duplex (time division duplex, TDD) system, and the like. The technical solutions provided in this application may be further applied to a future communication system, for example, a 6th generation mobile communication system, and may be further applied to device-to-device (device-to-device, D2D) communication, vehicle-to-everything (vehicle-to-everything, V2X) communication, machine-to-machine (machine-to-machine, M2M) communication, machine type communications (machine type communications, MTC), an internet of things (internet of things, IoT) communication system or another communication system, and the like.

A terminal device in embodiments of this application may be a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile communication network (public land mobile network, PLMN), or the like. This is not limited in the embodiments of this application.

An access network device in embodiments of this application may be a device that has a wireless transceiver function and is located on a network side, and includes but is not limited to a next-generation NodeB (gNodeB, gNB) in the 5th generation (5th generation, 5G) communication system, a base station in the 6th generation (6th generation, 6G) mobile communication system, a base station in the future mobile communication system, an access node or the like in a wireless fidelity (wireless fidelity, Wi-Fi) system, an evolved NodeB (evolved NodeB, eNB) in the long term evolution (long term evolution, LTE) system, a radio network controller (radio network controller, RNC), a NodeB (NodeB, NB), a base station controller (base station controller, BSC), a home base station (for example, a home evolved NodeB, or a home NodeB, HNB), a base band unit (base band unit, BBU), a transmission reception point (transmission reception point, TRP), a transmitting point (transmitting point, TP), a base transceiver station (base transceiver station, BTS), or the like. In addition, the access network device may alternatively be a wireless controller, a relay station, a vehicle-mounted device, a wearable device, or the like in a cloud radio access network (cloud radio access network, CRAN) scenario. In addition, the base station may be a macro base station, a micro base station, a relay node, a donor node, or a combination thereof. This is not limited in embodiments of this application.

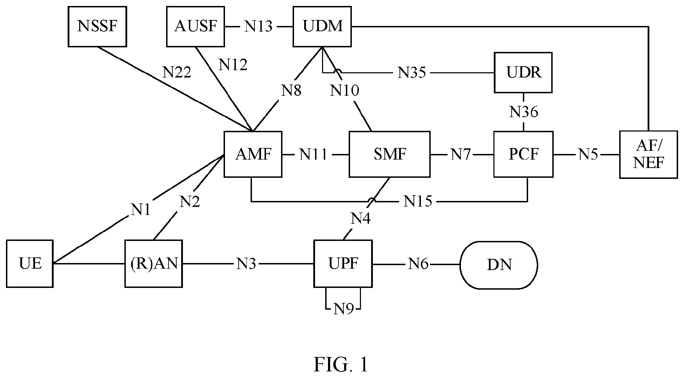

FIG. 1 is a diagram of a network architecture applicable to an embodiment of this application.

Main functions of network elements are described as follows:

Application function (application function, AF): mainly transmits requirements of an application side on a network side, for example, quality of service (quality of service, QoS) requirements or user status event subscription. The AF may be a third-party functional entity or an application service deployed by an operator, for example, an internet protocol multimedia subsystem (internet protocol multimedia subsystem, IMS) voice call service. When interacting with a core network, an application function entity of a third-party application may further perform authorization processing via a network exposure function (network exposure function, NEF). For example, the third-party application function directly sends a request message to the NEF, and the NEF determines whether the AF is allowed to send the request message. If the verification succeeds, the request message is forwarded to a corresponding policy control function (policy control function, PCF) or unified data management (unified data management, UDM).

UDM: is mainly responsible for functions such as managing a subscriber identifier, subscription data, authentication data, and subscriber access authorization.

Unified data repository (unified data repository, UDR): is mainly responsible for a function of storing types of data such as subscription data, policy data, and application data.

PCF: is mainly responsible for policy control functions such as charging on a session and a service flow level, QoS bandwidth guarantee, mobility management, and UE policy decision-making. In this architecture, PCFs connected to an access and mobility management function (access and mobility management function, AMF) and a session management function (session management function, SMF) respectively correspond to an AM PCF (PCF for access and mobility control) and an SM PCF (PCF for session management), and may not be a same PCF entity in an actual deployment scenario.

SMF: mainly performs functions such as session management, execution of a control policy delivered by the PCF, UPF selection, and UE IP address allocation.

Network slice selection function (network slice selection function, NSSF): is to select a slice instance set for a UE and determine an AMF set and allowed NSSAI for the UE.

AMF: mainly performs functions such as mobility management, and access authentication/authorization. In addition, the AMF network element is further responsible for transferring a user policy between the UE and the PCF.

User plane function (user plane function, UPF): serves as an interface UPF for a data network and implements functions such as user plane data forwarding, session/flow-level based charging statistics, and bandwidth limiting.

Radio access network (radio access network, (R)AN): corresponds to different access networks in 5G, for example, a plurality of manners such as wired access and wireless base station access.

Authentication server function (authentication server function, AUSF): is used to perform security authentication on the UE when the UE accesses a network.

Functions of interfaces between the network elements in FIG. 1 are described as follows:
(1) N1: is an interface between the AMF and the terminal, and may be configured to transfer a QoS control rule or the like to the terminal.
(2) N2: is an interface between the AMF and the RAN, and may be configured to transfer radio bearer control information or the like from a core network side to the RAN.
(3) N3: is an interface between the RAN and the UPF, and is mainly configured to transfer uplink and downlink user-plane data between the RAN and the UPF.
(4) N4: is an interface between the SMF and the UPF, and may be configured to transfer information between a control plane and a user plane, including delivering a forwarding rule, a QoS control rule, a traffic statistical rule, or the like from the control plane to the user plane, and reporting information about the user plane.
(5) N5: is an interface between the AF and the PCF, and may be configured to deliver an application service request and report a network event.
(6) N6: is an interface between the UPF and the DN, and is configured to transfer uplink and downlink subscriber data flows between the UPF and the DN.
(7) N7: is an interface between the PCF and the SMF, and may be used to deliver control policies at a protocol data unit (protocol data unit, PDU) session granularity and a service data flow granularity.
(8) N8: is an interface between the AMF and the UDM, and may be configured by the AMF to obtain, from the UDM, access and mobility management-related subscription data and authentication data, configured by the AMF to register current mobility management-related information of the terminal with the UDM, and the like.
(9) N9: is a user-plane interface between UPFs, and is configured to transfer uplink and downlink subscriber data flows between the UPFs.
(10) N10: is an interface between the SMF and the UDM, and may be configured by the SMF to obtain session management-related subscription data from the UDM, configured by the SMF to register current session-related information of the terminal with the UDM, and the like.
(11) N11: is an interface between the SMF and the AMF, and may be configured to transfer PDU session tunnel information between the RAN and the UPF, transfer a control message sent to the terminal, transfer radio resource control information sent to the RAN, and the like.
(12) N12: is an interface between the AMF and an AUSF, and may be used by the AMF to initiate an authentication procedure to the AUSF, where an SUCI may be carried as a subscription identifier.
(13) N13: is an interface between the UDM and the AUSF, and may be used by the AUSF to obtain a user authentication vector from the UDM, to perform the authentication procedure.
(14) N15: is an interface between the PCF and the AMF, and may be used to deliver a terminal policy and an access control-related policy.
(15) N35: is an interface between the UDM and a UDR, and may be used by the UDM to obtain user subscription data information from the UDR.
(16) N36: is an interface between the PCF and the UDR, and may be used by the PCF to obtain policy-related subscription data and application data-related information from the UDR.
(17) N52: is an interface between the UDM and the NEF, and is used by the NEF to expose a network capability to a third-party application function. For example, the third-party application function subscribes to reachability events of all users in a specific group from the UDM through the NEF.

The network elements or the functions may be network elements in a hardware device, may be software functions running on dedicated hardware, or may be virtualized functions instantiated on a platform (for example, a cloud platform). Optionally, the foregoing network elements or functions may be implemented by one device, may be jointly implemented by a plurality of devices, or may be implemented by one functional module in one device. This is not specifically limited in this embodiment of this application.

In addition, the foregoing "network element" may also be referred to as an entity, a device, an apparatus, a module, or the like. This is not particularly limited in this application. In addition, for ease of understanding and description, a description of the "network element" is omitted in some descriptions below. For example, an AMF network element is briefly referred to as an AMF. In this case, the "AMF" should be understood as an AMF network element or an AMF entity. Descriptions of same or similar cases are omitted below.

It should be understood that FIG. 1 is merely an example of a network architecture, and a network architecture applicable to embodiments of this application is not limited thereto. Any network architecture that can implement functions of the foregoing network elements is applicable to embodiments of this application. For example, in some network architectures, network function entities such as an AMF, an SMF, a PCF, and a UDM are all referred to as network function (network function, NF) network elements; or in some other network architectures, a set of network elements such as an AMF, an SMF, a PCF, and a UDM may be referred to as control plane function (control Plane function, CPF) network elements.

Based on the network architecture described in FIG. 1, the following introduces a technical problem to be resolved in this application and technical solutions of this application.

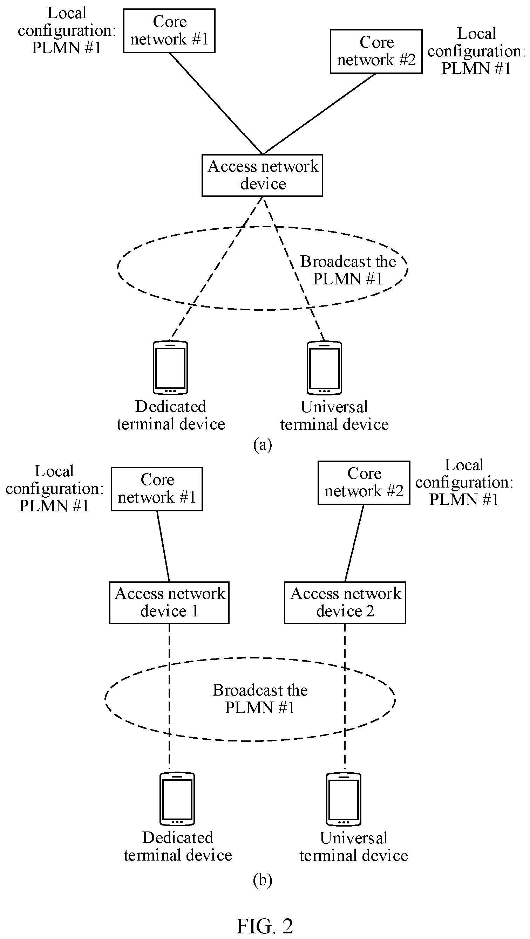

FIG. 2 is a diagram of a communication scenario applicable to technical solutions of this application. A possible communication scenario is shown in (a) in FIG. 2. To support both providing a network service for a public network subscriber and providing a network service for a dedicated network subscriber, an operator may deploy a shared base station, for example, a next generation base station (next generation NodeB, gNB), for the public network and the dedicated network, so that the public network subscriber can access the public network through the shared base station, and the dedicated network subscriber can access the dedicated network through the shared base station. As shown in (a) in FIG. 2, a core network #1 and a core network #2 share an access network device. The core network #1 and the core network #2 each are locally configured with a PLMN #1. In other words, the core network #1 and the core network #2 are deployed by a same operator. A PLMN ID broadcast by the access network device is the PLMN #1. A universal terminal device in FIG. 2 represents a terminal device that supports access only to a public core network, and a dedicated terminal device represents a terminal device that supports access to a dedicated core network. Optionally, the dedicated terminal device may also support access to a public core network. For example, the core network #1 is a public core network, and the core network #2 is a campus network, for example, an enterprise campus or a mine campus. In another possible communication scenario shown in (b) in FIG. 2, a core network #1 and a core network #2 each have an independent base station. For example, the core network #1 corresponds to an access network device 1, and the core network #2 corresponds to an access network device 2. In the scenario in (b) in FIG. 2, for example, in a possible case, a dedicated terminal device initiates a registration request, and the access network device 1 selects, for the dedicated terminal device, an AMF in the core network #1 to provide a network service. However, based on a method provided in this application, the AMF in the core network #1 performs access decision-making, determines to reject access of the dedicated terminal device to the core network #1, and triggers the dedicated terminal device to perform cell reselection. After the dedicated terminal device performs cell reselection, a selected target cell may be provided by the access network device 2. Subsequently, the access network device 2 selects an AMF in the core network #2 to provide a network service for the dedicated terminal device. It can be learned that a target access network device after the UE performs the cell reselection may be different from an access network device before the UE performs the cell reselection.

According to an existing communication protocol, a 5G access network (access network, AN) performs initial AMF selection mainly based on the following information:
a PLMN ID;
a location of the UE;
a network slice list requested by the UE, usually represented as requested NSSAI, where the NSSAI represents network slice selection assistance information (network slice selection assistance information); and
a local operator policy.

In the foregoing information, the 5G AN cannot distinguish between a public network subscriber and a dedicated subscriber based on the information such as the PLMN ID, the location of the UE, and the local operator policy. However, some UEs on a live network do not have a capability of carrying network slice information. Therefore, currently, the AN cannot distinguish between a public network subscriber and a dedicated network subscriber. Therefore, when a public network and a dedicated network share an access network device, the AN cannot ensure that a correct core network is selected for the dedicated network subscriber or the public network subscriber. For example, the dedicated network is a campus network. If a public core network and the campus network share a base station, the public network subscriber or a subscriber of the campus network initiates a registration procedure. After receiving a registration request of the UE, the shared base station selects an initial AMF based on the foregoing information, and forwards the registration request to an AMF (namely, the selected initial AMF) of a corresponding core network, that is, forwards the registration request to the corresponding core network. However, as described above, because the AN cannot distinguish between a public network subscriber and a dedicated network subscriber, the shared base station may forward the registration request of the UE to an AMF in an unsuitable core network. In other words, the shared base station may select, for the UE, the AMF in the unsuitable core network to provide a network service. For example, the access network device selects an AMF in a campus network for a public network subscriber, selects an AMF in a public network for a campus subscriber suitable for accessing a campus network, or selects an AMF in a campus network for a campus subscriber suitable for accessing a public core network.

If the foregoing case occurs, after the AMF in the campus network or the AMF in the public network receives a registration request of a subscriber, access of the subscriber may be rejected, leading to some problems. For example, efficiency of accessing the core network by the UE is reduced, or the terminal device cannot access the network for a long time.

In this case, this application provides a network access method that is not only applicable to a communication scenario in which a shared access network device is deployed for a public core network and a dedicated core network, but also applicable to a communication scenario in which an independent access network device is deployed for each of a public core network and a dedicated core network. In addition, a terminal device (for example, a public network subscriber or a dedicated network subscriber) can access a suitable core network.

It should be understood that, enabling the UE to access a correct core network in this specification may be enabling the UE to access a suitable core network, and is not limited to enabling a public network subscriber to access a public core network and enabling a dedicated network subscriber to access a dedicated core network. For example, if a dedicated network subscriber is not registered with a public network, the dedicated network subscriber can access only a dedicated core network. In this case, the dedicated core network is a correct core network. If a public network subscriber is not registered with a dedicated network, the public network subscriber can access only a public core network. In this case, the public core network is a correct core network. If a dedicated network subscriber is also registered with a public network, the dedicated network subscriber can access both a public core network and a dedicated core network. In this case, which core network the dedicated network subscriber is suitable for accessing needs to be comprehensively considered with reference to some other factors. For example, when the dedicated network subscriber requests to access a network outside a dedicated network area range, a suitable network is the public core network instead of the dedicated core network. The following provides some detailed examples of access decision-making.

The following uses network elements in a 5G system as an example to describe details of a solution. It may be understood that, when this solution is applied to an LTE system or a future communication system, each network element in the solution may be replaced with another network element having a corresponding function. This is not limited in this application.

In addition, in embodiments of this application, a registration procedure of a UE in a core network is usually also referred to as a subscriber registration procedure. For example, a general subscriber registration procedure may be briefly described as follows: The UE sends a registration request to an AMF through an AN. The AMF obtains subscription data from a specific UDM based on a subscriber identifier. After receiving the request, the UDM may obtain actual subscription data from a UDR.

As described above, embodiments of this application further relate to a public network or a dedicated network.

The public network is a communication network constructed by a network service provider (or referred to as an operator) for a public subscriber to use.

The dedicated network is a dedicated network that provides network signal coverage in a specific area and provides communication services for specific subscribers in terms of organization, command, management, production, and dispatching. For example, an enterprise campus is a dedicated network, and may also be referred to as a campus network.

A core network is responsible for providing functions such as access and mobility management, session management, policy control, and subscription management in a public network or a dedicated network deployed by an operator, and corresponds to network elements other than the UE, the AF, and the access network in the 5G system. In addition, the core network may include only some network elements in FIG. 1, all network elements in FIG. 1, or network elements other than those in FIG. 1. This is not limited in this application.

In addition, embodiments of this application relate to a registration procedure with AMF redirection.

A 5G AN is used as an example. The 5G AN receives a registration request and an AMF selection parameter that are from a UE, performs AMF selection based on the received AMF selection parameter and a local operator policy to determine an initial AMF, and forwards the registration request to the initial AMF. After receiving the registration request forwarded by the 5G AN, if the initial AMF determines that the initial AMF cannot provide a service for the UE, for example, does not support a network slice requested by the UE, the initial AMF forwards, through redirection, the registration request of the UE to another AMF that can provide a service for the UE. The another AMF is referred to as a target AMF. Optionally, before performing the redirection, the initial AMF may interact with a network element like a UDM/an NSSF/an NRF, to determine information about the target AMF that supports serving the UE. In an implementation, the initial AMF directly forwards a complete registration request message to the target AMF. In another implementation, the initial AMF forwards the registration request message to the target AMF via a gNB. A redirection request sent by the initial AMF to the gNB carries the information about the target AMF. The target AMF continues to perform a registration procedure for the UE.

It can be learned that, in the foregoing registration procedure with AMF redirection, the initial AMF may perform redirection of the registration request through a direct interface or an indirect interface between the initial AMF and the target AMF. In other words, the initial AMF needs to support a direct connection or an indirect connection to the target AMF.

However, in a UE access control communication scenario in which a public core network and a dedicated core network share an access network device that is to be resolved in this application, there is usually no direct or indirect connection between a dedicated network AMF (for example, an AMF in a campus network) and a public network AMF, and it is also difficult for the dedicated network AMF to register own information through a public network NRF. When a RAN receives a registration request of a campus subscriber and selects a public network AMF to provide a network service for the campus UE, the public network AMF cannot directly redirect the registration request of the campus subscriber to an AMF in a campus network through a redirection registration procedure. Conversely, the AMF in the campus network cannot redirect a registration request of a public network subscriber to a public core network.

It can be learned that, in the UE access control communication scenario to be resolved in this application, the UE cannot be redirected to a correct (or suitable) core network by simply reusing an existing redirection registration procedure.

The foregoing problem is resolved in the network access method provided in this application. In addition, the method is applicable to various possible scenarios in which a public network subscriber or a dedicated network subscriber accesses a network.

For clarity and brevity of description, a first core network and a second core network are introduced in embodiments of this application. Optionally, one of the first core network and the second core network is a public core network, and the other is a dedicated core network.

The following describes the technical solutions provided in this application in detail.

### Solution 1

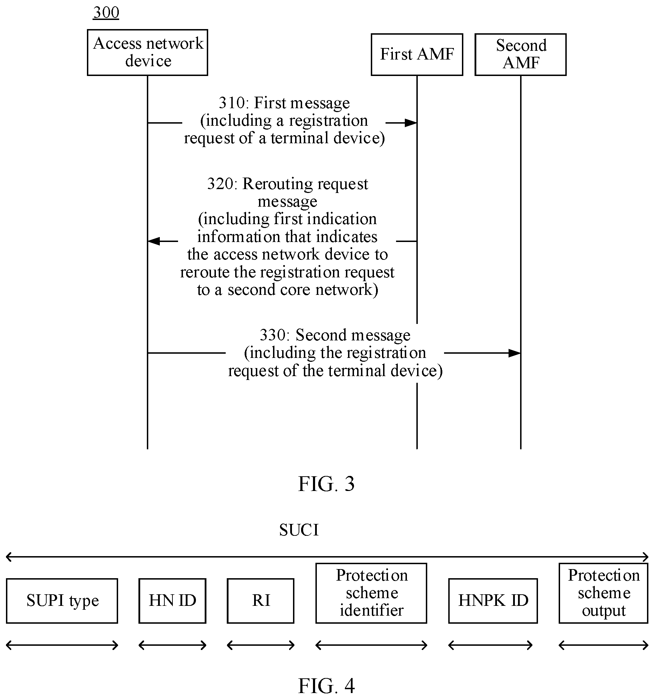

FIG. 3 is a schematic flowchart of a network access method according to this application.

310: A first AMF receives a first message from an access network device, where the first message includes a registration request of a terminal device, and the first AMF belongs to a first core network.

320: The first AMF sends a rerouting request message to the access network device based on the first message, where the rerouting request message includes first indication information, and the first indication information indicates the access network device to reroute the registration request to a second core network.

The first core network and the second core network share the access network device.

Optionally, the first indication information may include one or more of the following:
an identifier of the second core network;
an identifier of a network slice of the second core network; and
an AMF set identifier (AMF set ID), where the AMF set identifier is used by the access network device to determine the second core network.

It should be understood that the identifier of the second core network can uniquely identify a second core network, and the access network device can uniquely determine a second core network based on the identifier that is of the second core network and that is indicated by the first indication information. In other words, there is a one-to-one mapping relationship between the identifier of the second core network and the second core network.

The identifier of the network slice of the second core network may identify a second core network that provides a network slice. There may be one or more second core networks. To be specific, there may be a one-to-one mapping relationship between an identifier of a network slice and a second core network. For example, an identifier of one network slice corresponds to one second core network. Alternatively, there may be a one-to-many mapping relationship. For example, an identifier of one network slice corresponds to a plurality of second core networks. Alternatively, there may be a many-to-many mapping relationship. For example, an identifier of one network slice corresponds to a plurality of second core networks, and different second core networks may provide a same network slice or different network slices.

For example, the first core network is a public network. If the network slice that is of the second core network and that is indicated by the first indication information may be provided by a plurality of dedicated networks, it may be considered that the identifier of the network slice indicates that a target network to which the rerouting is performed is a dedicated network. The access network device may determine a dedicated network from dedicated networks that support access of the access network device and that can support the network slice indicated by the first indication information, and the determined dedicated network is the second core network. Optionally, if the identifier of the network slice indicated by the first indication information is provided only by a dedicated network that supports access of the access network device, the dedicated network that can provide the network slice is the second core network.

In addition, the AMF set identifier in this application needs to be different from an existing AMF set ID in a registration procedure with AMF redirection. It should be understood that the existing AMF set ID indicates an AMF set to the access network device, to assist the access network device in determining a target AMF from the AMF set. However, in this application, the AMF set identifier is used by the access network device to determine the second core network. In some examples, a specific AMF set identifier, for example, all 1s or a specific value, may be used, so that the AMF set identifier indicated by the first indication information is used by the access network device to determine the second core network. For example, a mapping relationship between the AMF set identifier configured on the access network device and the second core network may be a one-to-one mapping relationship.

Optionally, the first message includes an identifier of the terminal device and one or more of the following:
location information of the terminal device; and
an identifier of a network slice requested by the terminal device.

Optionally, the location information of the terminal device may be information about a TA and/or information about a cell on which the terminal device camps.

It should be understood that, for the UE that supports carrying the identifier of the network slice by the registration request, the first message may carry the identifier of the network slice requested by the terminal device.

Optionally, there may be a plurality of implementations in which the first AMF sends the rerouting message to the access network device based on the first message. The following provides some possible examples.
(1) In a possible implementation, the first AMF determines, based on the information carried in the first message, to reroute the registration request of the terminal device to the second core network.

For example, the first AMF initiates an authentication procedure to an AUSF/a UDM in the first core network based on the identifier that is of the terminal device and that is carried in the first message. The first core network does not store subscription data of the terminal device, and the first AMF sends the rerouting request message to the access network device.

For another example, the first AMF initiates an authentication procedure to an AUSF/a UDM in the first core network based on the identifier that is of the terminal device and that is carried in the first message, to obtain subscription data that is of the terminal device and that is stored in the first core network. In a possible implementation, the subscription data may include category information of the terminal device, and the category information indicates that the terminal device is of a public network subscriber category or a dedicated network subscriber category. The first AMF can learn of a category of the terminal device based on the subscription data. The first AMF sends the rerouting request message to the access network device when determining, based on the category information of the terminal device, that the terminal device is not of a subscriber category of the first core network.

It should be understood that, if the first core network is a public core network, in this example, the "subscriber category of the first core network" is the public network subscriber category, and that the terminal device is of the subscriber category of the first core network indicates that the terminal device is a public network subscriber. If the first core network is a dedicated core network, in this example, the "subscriber category of the first core network" is the dedicated network subscriber category, and that the terminal device is of the subscriber category of the first core network indicates that the terminal device is a dedicated network subscriber.

For example, the first core network is a public core network, and the first AMF in the first core network determines, based on the identifier of the terminal device, that the first core network stores the subscription data of the terminal device. If the category information included in the subscription data indicates that the terminal device is of the dedicated network subscriber category, the first AMF sends the rerouting request message to the access network device.

For another example, the first message includes the identifier of the terminal device and the location information of the terminal device. The first AMF determines, based on the identifier of the terminal device, that the first core network stores the subscription data of the terminal device. The first AMF sends the rerouting request message to the access network device when the first AMF determines, based on the location information of the terminal device, that the TA in the location information is within a TA range of the second core network or the cell in the location information is within a cell range of the second core network. It should be understood that the location information of the terminal device may be a TA granularity or a cell granularity. This is not limited.

For another example, the first message includes the identifier of the terminal device and the identifier of the network slice requested by the terminal device. The first AMF determines, based on the identifier of the terminal device, that the first core network stores subscription data of the terminal device. The first AMF sends the rerouting request message to the access network device when the first AMF determines, based on the identifier of the network slice requested by the terminal device, that the network slice requested by the terminal device is provided by the second core network. This implementation is applicable to decision-making performed when a terminal device that supports carrying a network slice by a registration request accesses a network.

(2) In another possible implementation, the first AMF is configured with one or more of a subscriber list of the second core network, a TAI list of the second core network, and an NCGI list of the second core network. In this case, the first AMF determines, based on the information carried in the first message and one or more of the locally configured subscriber list, TAI list, and NCGI list of the second core network, to reroute the registration request of the terminal device to the second core network.

Optionally, the subscriber list of the second core network may be a number segment of a subscriber of the second core network. For example, the number segment of the subscriber may be one or more of the following:
a globally unique subscription permanent identifier (subscription permanent identifier, SUPI) number segment, an international mobile subscriber identifier (international mobile subscriber identifier, IMSI) number segment, a routing identifier (routing identifier, RI) number segment in a global subscription concealed identifier (subscription concealed identifier, SUCI), or a home network public key identifier (home network identifier, HNPK ID) number segment in the SUCI.

FIG. 4 is a diagram of a structure of an SUCI. As shown in the figure, the SUCI includes the following fields:
an SUPI type (SUPI type): having a value range of 0 to 7 indicating the SUPI type;
a home network identifier (home network identifier, HN ID): identifying a home network of a UE, where a format depends on the SUPI type; and when the SUPI type is an IMSI, the HN ID includes a mobile country code (mobile country code, MCC) and a mobile network code (mobile network code, MNC);
an RI: allocated by a home operator, having a length of a decimal number of 1 to 4 digits, and ranging from 0000 to 9999;
a protection scheme identifier (protection scheme identifier): ranging from 0 to 15;
an HNPK ID: having a value range of 0 to 255; and
a protection scheme output (scheme output), whose format depends on a protection scheme.

Optionally, in an implementation, the RI in the SUCI may be used to distinguish between a public network subscriber and a dedicated network subscriber, or the RI+HNPK ID in the SUCI may be used to distinguish between a dedicated network subscriber and a public network subscriber. In addition, there are the mobile country code (mobile country code, MCC) and the mobile network code (mobile network code, MNC). If the RI+HNPK ID, and the MNC are combined to distinguish between a public network subscriber and a dedicated network subscriber, value space of a number segment of the UE is a quantity of MNCs*the value range of the RI*the value range of the HNPK ID.

Optionally, in an implementation, if the first AMF can obtain SUPI information, the first AMF can distinguish between a dedicated network subscriber and a public network subscriber based on an SUPI number segment.

If it is considered that a dedicated network subscriber accesses a network only in a range (for example, a campus range) corresponding to a dedicated network, the foregoing implementation does not affect a public network subscriber. In a possible case, the dedicated network UE carries the SUCI to initiate a registration procedure. After obtaining the registration request, the first AMF (namely, the initial AMF) may directly trigger, based on the RI and/or the HNPK ID and the TAI+NCGI, the access network device to perform rerouting. In another possible case, the dedicated network UE carries a 5G-GUTI to initiate a registration procedure. In this case, the 5G-GUTI is allocated by a dedicated network AMF. In this case, the access network device may reroute the registration request to the dedicated network AMF based on an S-TMSI.

In addition, if it is considered that the dedicated network subscriber accesses the public network beyond a range corresponding to the dedicated network, the following scenarios may occur:

If the UE carries the 5G-GUTI to initiate the registration procedure and the 5G-GUTI is allocated by the public network AMF, the following may be implemented:

The first AMF (an example of the initial AMF) obtains a subscriber context from an old AMF (old AMF) based on the 5G-GUTI, and determines, based on the received SUPI+TAI (an example of current location information of the UE)+NCGI (for example, the campus range), to trigger the access network device to perform rerouting.

It may be understood that the initial AMF (initial AMF) and the old AMF are different AMFs. The old AMF is an AMF accessed by the UE during last registration, and the initial AMF is an AMF currently accessed by the UE. An interface may be deployed between the old AMF and the initial AMF for the initial AMF to query the old AMF for subscriber context information.

If the first AMF (an example of the initial AMF) determines that the received registration request is from the range (for example, the campus range) corresponding to the dedicated network, the first AMF requires the UE to perform registration by using the SUCI instead of the 5G-GUTI. For example, the first AMF indicates, by using an identity request or an error code #9, the UE to report the SUCI. The error code #9 indicates that an error cause is that the UE identity cannot be derived by the network (UE identity cannot be derived by the network).

For example, the first AMF is configured with the subscriber list of the second core network, and the first AMF can learn, based on the identifier that is of the terminal device and that is in the first message and the subscriber list of the second core network, whether the terminal device is a subscriber of the second core network. If the identifier of the terminal device is in the subscriber list of the second core network, the first AMF sends the rerouting request message to the access network device.

Optionally, for example, the first message includes the identifier of the terminal device and the location information of the terminal device, and the first AMF is configured with the subscriber list of the second core network and the TAI list of the second core network.

In this case, for example, the first AMF determines, based on the identifier of the terminal device, that the first core network stores subscription data of the terminal device. In addition, the first AMF determines, based on the identifier of the terminal device and the subscriber list of the second core network, that the terminal device is a subscriber of the second core network. In this case, the first AMF determines, with reference to the location information of the terminal device, whether to reroute the registration request of the terminal device to the second core network. For example, if the TA in the location information of the terminal device is included in the TAI list of the second core network, the first AMF sends the rerouting request message to the access network device. Alternatively, the TAI list of the second core network in this example may be a cell list of the second core network. If the cell in the location information of the terminal device is included in the cell list of the second core network, the first AMF sends the rerouting request message to the access network device.

For another example, the first message includes the identifier of the terminal device and the location information of the terminal device, and the first AMF is configured with the TAI list of the second core network and/or the NCGI list of the second core network. The first AMF determines, based on the identifier of the terminal device, that the first core network does not store subscription data of the terminal device, and the TA in the location information of the terminal device is included in the TAI list of the second core network, or the cell in the location information of the terminal device is included in the NCGI list of the second core network. In this case, the first AMF sends the rerouting request message to the access network device.

330: The access network device sends a second message to a second AMF based on the first indication information.

The second message includes the registration request of the terminal device, and the second AMF belongs to the second core network.

For example, the access network device is configured with one or more of the following information:
a mapping relationship between a network identifier and a second core network;
a mapping relationship between an identifier of a network slice and a second core network; and
a mapping relationship between an AMF set identifier and a second core network.

It should be understood that the mapping relationship may be a one-to-one mapping relationship, a many-to-one mapping relationship, or a many-to-many mapping relationship. For example, a network identifier and a second core network are usually in the one-to-one mapping relationship. An identifier of a network slice and a second core network may be in the one-to-one mapping relationship, where for example, an identifier of one network slice uniquely corresponds to one second core network, or may be in the one-to-many mapping relationship, where for example, an identifier of one network slice corresponds to a plurality of second core networks, indicating that the plurality of second core networks can all provide the network slice, or may be in the many-to-many mapping relationship, where for example, an identifier of one network slice corresponds to a plurality of second core networks, and different second core networks may provide a same network slice. For example, an AMF set identifier and a second core network may be in the one-to-one mapping relationship. For example, one AMF set identifier uniquely corresponds to one second core network.

When the access network device obtains the first indication information from the first AMF, as described above, the first indication information indicates one or more of the identifier of the second core network, the identifier of the network slice of the second core network, or the AMF set identifier, the access network device determines the second core network based on the information indicated in the first indication information and with reference to the locally configured mapping relationship, and selects the target AMF, namely, the second AMF, from the second core network.

For example, the first indication information indicates a network identifier (for example, an identifier a), and the access network device determines, based on the locally configured mapping relationship between a network identifier and a second core network, a second core network corresponding to the network identifier a indicated by the first indication information.

For example, the first indication information indicates an identifier (for example, an identifier a) of a network slice, and the access network device determines, based on the locally configured mapping relationship between an identifier of a network slice and a second core network, a second core network that provides the network slice corresponding to the identifier a.

For example, the first indication information indicates an AMF set identifier (AMF set ID), and the access network device determines a second core network based on the AMF set ID and the locally configured mapping relationship between an AMF set identifier and a second core network.

The foregoing describes the solution 1.

It can be learned from the foregoing example that the solution 1 provided in this application can provide solutions in the following scenarios:
(1) The dedicated network subscriber is not registered with the public network, the first AMF may perform an action in embodiments based on the locally configured number segment information of the subscriber of the second core network and other information (for example, current location information (optional)) of the UE.
(2) The dedicated network subscriber is registered with the public network, and the first AMF performs an action in embodiments based on the locally configured number segment information of the subscriber of the second core network and other information (for example, current location information (mandatory)) of the UE.
(3) The dedicated network subscriber is not registered with the public network, and the first AMF is not configured with the number segment information of the subscriber of the second core network. The AMF triggers, based on other information of the UE, for example, current location information of the UE and a requested network slice, execution of an action in embodiments.

In the solution 1, the procedure with AMF redirection is enhanced, to trigger the AMF to redirect the registration request of the terminal device to a correct AMF for access. The solution 1 is applicable to a scenario in which the RAN selects a dedicated network AMF for a public network subscriber or the RAN selects a public network AMF for a dedicated network subscriber suitable for accessing a dedicated network.

It can be learned that, in the solution 1, after determining that the UE is suitable for accessing another core network, the initial AMF (for example, the first AMF) may indicate the RAN to perform rerouting, and include the first indication information in the rerouting request message, to assist the RAN in determining a target core network and determining a target AMF from the target core network, so that the UE accesses a suitable core network.

### Solution 2

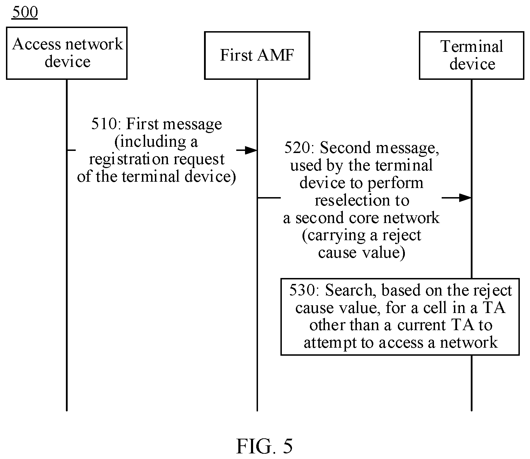

FIG. 5 is another schematic flowchart of a network access method according to this application.

510: A first AMF receives a first message from an access network device, where the first message includes a registration request of a terminal device. The first AMF belongs to a first core network.

520: The first AMF sends a second message to the terminal device based on the first message, where the second message is used by the terminal device to perform reselection to a second core network.

The first access network and the second core network may share the access network device, or may not share the access network device. This is not limited in this application.

Optionally, for example, in step 520, the first AMF sends a registration reject response message to the terminal device based on the first message, where the registration reject response message carries a reject cause value, and the reject cause value indicates the terminal device to search for a cell in a TA other than a current TA to attempt to access a network.

530: The terminal device searches, based on the reject cause value, for the cell in the TA other than the current TA to attempt to access the network.

Optionally, the terminal device performs cell selection in another TA based on the reject cause value. A selected new cell may be located in another access network device, or may continue to be located in the original access network device, that is, the access network device in step 510.

In addition, the terminal device no longer attempts, based on the reject cause value, to access the network in the current TA.

In the solution 2, the registration reject procedure is enhanced, to trigger the terminal device to initiate a registration procedure by using a correct TA. The solution 2 is applicable to a scenario in which the RAN selects an AMF in a public core network to provide a network service for a dedicated network subscriber suitable for accessing a dedicated network or the RAN selects an AMF in a dedicated core network to provide a network service for a public network subscriber.

It can be learned that, in the solution 2, if the first AMF determines to reject access of the UE to the first core network, the first AMF may include a new reject cause value in the registration reject response message. Based on the new reject cause value, the UE may search for a cell in another surrounding TA again to attempt to access the network. In this case, the reselected cell may be located in a same base station, or may be located in a different base station. This is not limited in this application.

### Solution 3

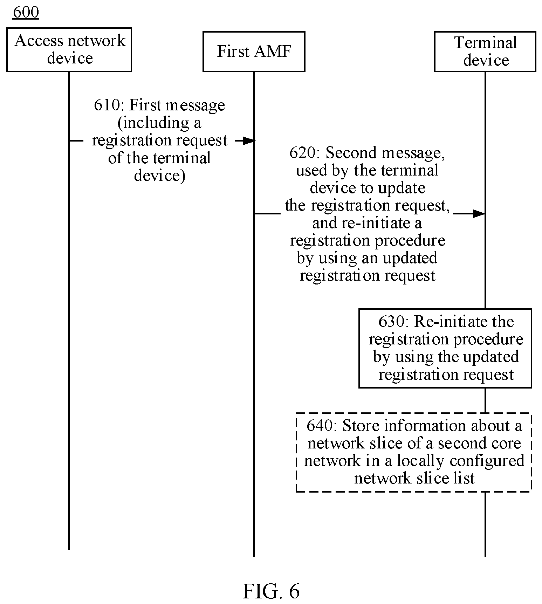

FIG. 6 is a schematic flowchart of a network access method according to this application.

610: A first AMF receives a first message from an access network device, where the first message includes a registration request of a terminal device. The first AMF belongs to a first core network.

620: The first AMF sends a second message to the terminal device based on the first message, where the second message indicates the terminal device to update the registration request and initiate a registration procedure based on an updated registration request.

Optionally, the first access network and a second core network may share the access network device, or may not share the access network device. This is not limited in this application.

Optionally, for example, in step 620, the first AMF sends a registration reject response message to the terminal device based on the first message, where the registration reject response message carries information about a network slice of the second core network.

630: The terminal device re-initiates the registration procedure by using the updated registration request, where the updated registration request includes updated network slice information, and the updated network slice information includes the information about the network slice of the second core network.

It should be understood that the updated registration request is initiated by the terminal device through a target access network device. Specifically, the terminal device may perform cell reselection based on the updated network slice information and cell broadcast information, to determine the target access network device. The target access network device may be the original access network device, that is, the access network device in step 610, or may be another access network device. This is not limited in this application. Optionally, the cell broadcast information may include TA information, information about an optional network slice, and the like. For example, the terminal device determines, based on the updated network slice information and the cell broadcast information, that the terminal device needs to access the network through another cell. The another cell may be located in the original access network device, or may be located in another access network device.

Optionally, the method further includes step 640.

640: The terminal device stores the information about the network slice of the second core network in a locally configured network slice list.

In the solution 3, the registration reject procedure is enhanced. The AMF includes the information about the network slice of the second core network in the registration reject response message, so that the UE updates the registration request, includes the information about the network slice in the updated registration request, and re-initiates the registration procedure. The information about the network slice that is carried in the updated registration request enables the access network device to select a suitable core network for the terminal device for access. Solution 3 is mainly applicable to a scenario in which a terminal device that supports carrying network slice information by a registration request attempts to access a network (specifically, a core network).

It can be learned that, in the solution 3, when the first AMF determines to reject access of the UE to the first core network, the first AMF may include the identification information of the network slice of the second core network in the registration reject response message, to trigger the UE to carry the updated requested NSSAI to re-initiate the registration procedure, to correctly access the second core network.

The foregoing describes in detail the network access method provided in this application. The following provides several examples to describe the foregoing several solutions.

In the following examples, an example in which the first core network is a public core network and the first AMF belongs to the public core network is used for description.

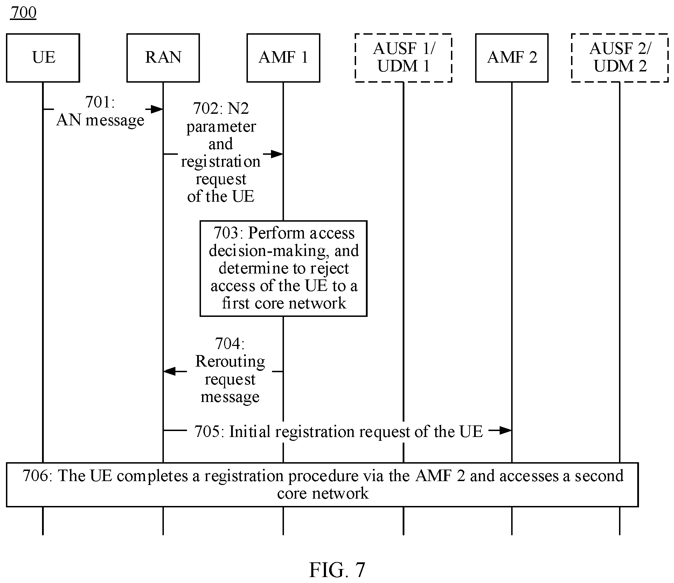

FIG. 7 shows an example of a network access method according to this application. FIG. 7 is an example of the foregoing solution 1.

701: A UE sends an AN message to a RAN.

The AN message carries an AN parameter and a registration request (registration request). The registration request is a non-access stratum (non-access stratum, NAS) message. For example, the AN parameter may include information such as an identifier of the UE, for example, a 5G-S-TMSI, a globally unique AMF identifier (globally unique AMF identifier, GUAMI), and a selected PLMN ID (selected PLMN ID). The registration request includes the identifier of the UE, for example, an SUCI or a 5G globally unique temporary identifier (5G globally unique temporary identifier, 5G-GUTI). In addition, the registration request may further include information such as a tracking area identifier (tracking area identifier, TAI) accessed by the UE last time and a registration type. Optionally, the registration type may include initial registration, mobility registration, periodic registration, or emergency registration.

The 5G-S-TMSI is a shortened form of the 5G-GUTI.

The RAN receives the AN message from the UE.

702: The RAN sends an N2 parameter and the registration request of the UE to an AMF 1.

For example, the RAN performs AMF selection based on the information in the AN message, a cell on which the UE currently camps, and a local operator policy. It is assumed that after performing the AMF selection, the RAN selects an AMF in a public core network, for example, the AMF 1 in FIG. 7. The RAN sends the N2 parameter and the registration request of the UE to the AMF 1. For example, the RAN sends an N2 interface message to the AMF 1, where the N2 interface message includes the N2 parameter and the registration request of the UE. The N2 parameter includes a selected PLMN ID and location information of the UE. Optionally, the location information of the UE may be information about the cell on which the UE currently camps, or information about a TA, for example, TAI information, corresponding to the cell on which the UE camps.

703: The AMF 1 performs access decision-making, and determines to reject access of the UE to the first core network.

That the AMF 1 performs access decision-making may specifically indicate that the AMF 1 determines whether to enable the UE to access the first core network. In this example, the first core network is a public core network.

In step 703, the AMF 1 may determine, based on different scenarios, to accept access of the UE to the public core network, or the AMF 1 determines to reject access of the UE to the public core network. When the access of the UE to the public core network is rejected, the AMF 1 sends a rerouting request message to the RAN, to reroute the registration request of the UE to a dedicated core network. It should be understood that the technical solutions of this application are mainly applicable to a case in which the RAN selects the public core network to provide a network service for a dedicated UE, and the AMF 1 in the public core network reroutes the registration request of the dedicated UE to an AMF in the dedicated core network. For details, refer to various possible example descriptions in step 320. Details are not described herein again.

When the AMF 1 determines to reroute the UE to the dedicated core network, the AMF 1 sends the rerouting request message to the RAN, as shown in step 704.

704: The AMF 1 sends the rerouting request message to the RAN.

In addition to the registration request sent by the UE, the rerouting request message further includes first indication information. For descriptions of the first indication information, refer to the detailed descriptions in the foregoing solution 1. Details are not described herein again.

In addition, the AMF 1 may further send, to the RAN, other information provided by the AMF 1 (namely, the initial AMF) for the target AMF, for example, a list of network slices that the first core network/current TA rejects access of the UE (rejected NSSAI), and a list of configured network slices (configured NSSAI) that needs to be provided for the UE.

Subsequently, the RAN reroutes the registration request of the UE to the dedicated core network based on the rerouting request message from the AMF 1, as shown in steps 705 and 706.

705: The RAN sends an initial registration request of the UE to the target AMF.

Specifically, the RAN re-performs AMF selection based on the rerouting request message to determine the target AMF, and sends the initial registration request of the UE to the determined AMF.

In addition, information sent by the RAN to the target AMF may further include information provided by the source AMF (namely, the AMF 1) for the target AMF, as described in step 704.

It should be understood that, in this example, the target AMF is an AMF in the dedicated core network, for example, an AMF 2 in FIG. 7.

706: The UE completes a registration procedure via the target AMF (for example, the AMF 2) and accesses the second core network.

The target AMF continues to perform the registration procedure for the UE based on the information received in step 705, to complete access of the UE to the dedicated core network.

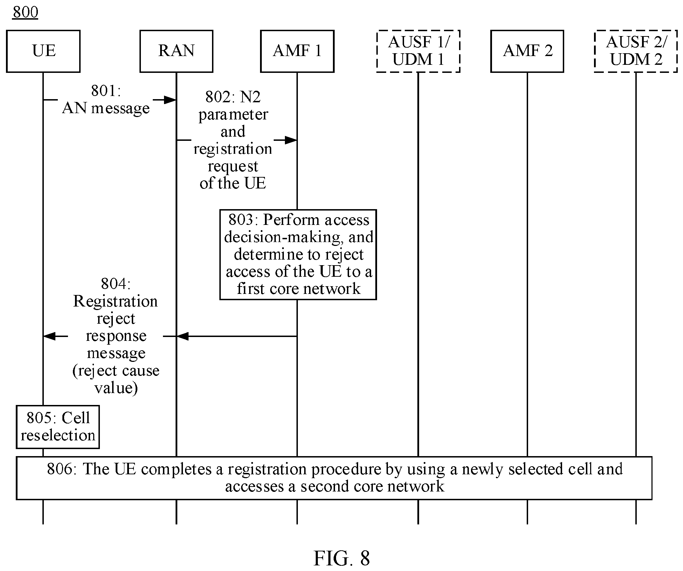

FIG. 8 shows an example of a network access method according to this application. FIG. 8 is an example of the foregoing solution 2.

801: A UE sends an AN message to a RAN.

802: The RAN sends an N2 parameter and a registration request of the UE to an AMF 1.

803: The AMF 1 performs access decision-making, and determines to reject access of the UE to a first core network.

For steps 801 to 803, refer to steps 701 to 703 in FIG. 7. Details are not described herein again.

Similar to the embodiment in FIG. 7, FIG. 8 still focuses on a case in which the first AMF determines, after performing access decision-making, that the UE is suitable for accessing the dedicated core network, and determines to reject access of the UE to the first core network.

804: The first AMF sends a registration reject response message to the UE through the RAN.

In a possible implementation, the registration reject response message carries a reject cause value, and the reject cause value indicates the UE to add a current TA to a "permanent forbidden TA" list, and search for a cell in another TA to attempt to access a network. The "permanent forbidden TA" list may be cleared after the UE is restarted or a SIM card is replaced.

In another possible implementation, the registration reject response message carries a reject cause value, and the reject cause value is #15. In other words, the reject cause value reuses a reject cause value #15 of an existing registration reject response message. It should be understood that, if the reject cause value in the registration reject response message is #15, the UE stores the current TA in a "forbidden TA for roaming" list, and searches for another TA to attempt to access the network.

805: The UE performs cell reselection based on the received registration reject response message.

Specifically, the UE adds the current TA to a corresponding forbidden TA list, and selects a cell in another TA at a current location to attempt to access the network. In this case, the reselected cell may be located in a same base station (for example, the RAN in steps 801 to 804), or may be located in a different base station. This is not limited in this application.

806: The UE completes a registration procedure by using the newly selected cell, and accesses a corresponding dedicated core network.

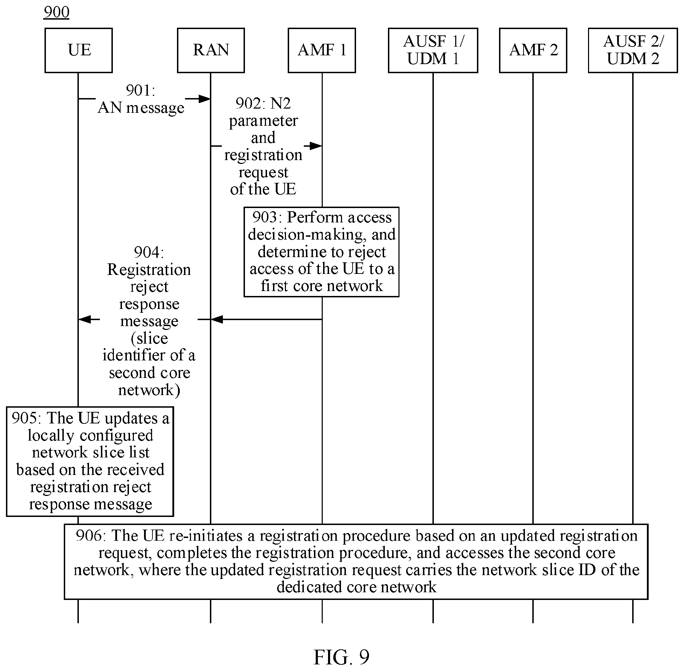

FIG. 9 shows an example of a network access method according to this application. FIG. 9 is an example of the foregoing solution 3.

901: A UE sends an AN message to a RAN.

902: The RAN sends an N2 parameter and a registration request of the UE to an AMF 1.

903: The AMF 1 performs access decision-making, and determines to reject access of the UE to a first core network.

For steps 901 to 903, refer to steps 701 to 703 in FIG. 7. Details are not described herein again.

904: The first AMF sends a registration reject response message to the UE through the RAN, where the registration reject response message carries a network slice ID of a dedicated core network. In addition, the registration reject response message further carries a reject cause value. The reject cause value indicates the UE to update the registration request and re-initiate a registration procedure by using an updated registration request. For example, the reject cause value may be different from any reject cause value carried in an existing registration reject response message, or a new reject cause value. Alternatively, an existing reject cause value may be reused, and the UE updates the registration request based on the cause value by using some other technical means or technologies, and re-initiates the registration procedure by using the updated registration request. This is not limited.

905: The UE updates a locally configured network slice list based on the received registration reject response message.

Based on the reject cause value, the UE updates the locally configured network slice list (configured NSSAI), and specifically adds the network slice ID of the dedicated core network that is carried in the registration reject response message to the locally configured network slice list.

906: The UE re-initiates the registration procedure based on the updated registration request, to complete the registration procedure and access a second core network. The updated registration request carries the network slice ID of the dedicated core network.

In other words, the updated registration request carries the requested NSSAI, and the requested NSSAI carries the network slice ID that is of the dedicated core network and that is indicated by the first AMF. The RAN that receives the updated registration request may select a correct dedicated core network for the UE based on the requested NSSAI, to complete the registration procedure.

The updated registration request is initiated by the UE through a target base station. The UE may perform cell reselection based on the updated network slice information and cell broadcast information, to determine the target base station. The target base station may be an original base station, or may be another base station. This is not limited in this application.

The following further provides an example of a network access method.

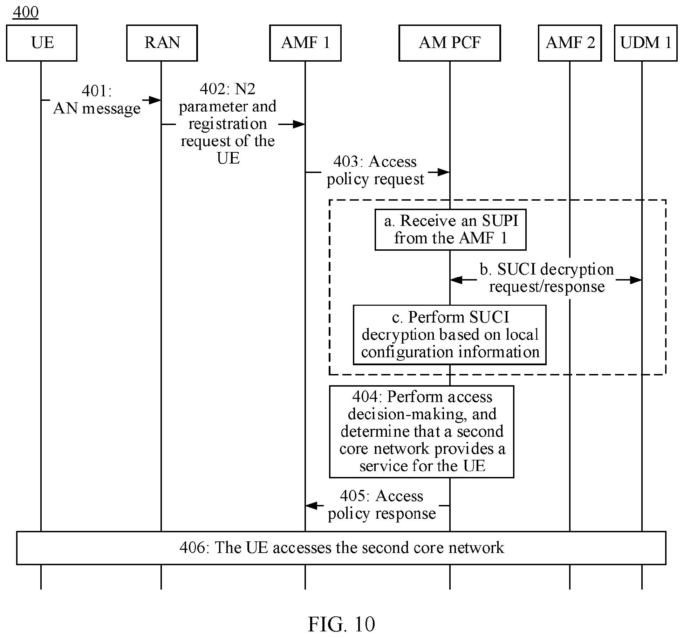

FIG. 10 is an example 400 of a network access method according to this application.

401: A UE sends an AN message to a RAN.

402: The RAN sends an N2 parameter and a registration request of the UE to an AMF 1.

For steps 401 and 402, refer to steps 701 and 702 in FIG. 7. Details are not described herein again.

403: The AMF 1 sends an access policy request to an AM PCF based on the registration request of the UE.

The AM PCF is an access and mobility management policy control network element, and the access and mobility management policy control network element is one type of access policy control network element. The AM PCF may alternatively be replaced with another type of access policy control network element. It should be understood that the AM PCF may alternatively be replaced with any network element in a core network. This is not limited in this application. The following uses the AM PCF as an access policy control network element for description. The foregoing descriptions are also applicable to descriptions in other parts, and details are not described again.

The access policy request carries an identifier of the UE. Optionally, the identifier of the UE may be an SUPI or an SUCI.

Optionally, the access policy request may be triggered by the AMF 1 through determining based on a current access location of the UE. For example, the UE currently performs access from a campus range.

In addition, the identifier that is of the UE and that is carried in the access policy request may come from the UE (for example, the UE carries the SUCI and/or the SUPI in the initial registration request), or may come from an old AMF previously accessed by the UE (for example, the AMF 1 determines the old AMF based on a 5G-GUTI carried by the UE, and obtains a UE context from the old AMF, where the UE context may include the SUPI of the UE).

Optionally, the access policy request may further include location information that is of the UE and that is received by the AMF 1, for example, information about a cell on which the UE currently camps, such as an NCGI and a TAI.

404: The AM PCF performs access decision-making based on the received access policy request, and determines that the second core network provides a service for the UE.

Before performing access decision-making, the AM PCF needs to first obtain the SUPI identifier of the UE mainly in the following three manners:

### Manner 1

The AM PCF obtains the SUPI of the UE from the access policy request. In other words, the access policy request sent by the AMF 1 carries the SUPI of the UE.

### Manner 2

The AM PCF interacts with a UDM 1 based on the SUCI. The UDM 1 maps the SUCI to the SUPI and returns the SUPI obtained through mapping. For example, the AM PCF sends an SUCI decryption request to the UDM 1, where the SUCI decryption request carries the SUCI that requests to be decrypted. The AMF 1 receives an SUCI decryption response from the UDM 1, where the SUCI decryption response carries the SUPI to which the SUCI is mapped. In this manner, the access policy request sent by the AMF 1 carries the SUCI of the UE.

### Manner 3

The AM PCF maps the SUCI to the SUPI based on local configuration information to obtain the SUPI. In this manner, the access policy request carries the SUCI.

Manner 1 to Manner 3 are respectively shown in a/b/c in dashed-line boxes in FIG. 10.

In step 404, specifically, the AM PCF may perform access decision-making based on the SUPI, the location information of the UE, locally stored subscriber data, an area range of the second core network, and other information, and determine that the second core network provides a service for the UE.

For example, the AM PCF may determine, based on one or more of the following causes, that the second core network provides the service for the UE.

The AM PCF determines, based on the SUPI of the UE, that the UE is a subscriber of the second core network.

The AM PCF determines, based on a subscriber category, that the UE is a dedicated network subscriber or a public network subscriber.

Alternatively, the AM PCF determines, based on the subscriber category and a location of the UE, that the current location of the UE is in an area range of a dedicated network or an area range of a public network, and the dedicated network or the public network needs to provide a service for the UE.

405: The AM PCF feeds back an access policy response to the AMF 1.

The access policy response may carry one or more of the following information:
(a) a network identifier of the second core network, for example, a campus network identifier;
(b) an identifier of a network slice in the second core network;
(c) an AMF set identifier corresponding to the second core network, where the AMF set identifier indicates the second core network that provides the service for the UE;
(d) a registration reject cause value; and
(e) an updated network slice (namely, an updated configured NSSAI).

For a function and a specific implementation of the registration reject cause value, refer to the description of the registration reject cause value in the solution 2. For details, refer to the descriptions in step 520 and step 530. For a function and a specific implementation of the updated configured NSSAI, refer to the description of the "updated network slice" in the solution 3. For details, refer to the descriptions in step 620 and step 630. Details are not described herein again.

406: The AMF 1 performs, based on the access policy response, the rerouting procedure in the solution 1, or the registration reject procedure in the solution 2 or the solution 3, so that the UE accesses the second core network.

It should be understood that, in this example, the decision of accessing the network by the UE is performed by the AM PCF. After the AM PCF determines that the UE needs to access the second core network, and feeds back the decision result to the first AMF by using the access decision response message, a procedure subsequently performed by the first AMF may reuse any procedure, for example, the rerouting procedure or the registration reject procedure, performed after the first AMF determines to reject access of the UE to the first core network in the foregoing solution 1, solution 2, or solution 3. This is not limited. In other words, after receiving the access policy response message, the first AMF may indicate the RAN/UE to enable the UE to access the network through the second core network.

In addition, the method procedure shown in FIG. 10 is applicable to a scenario in which the RAN selects an AMF in a public core network to provide a network service for a dedicated network subscriber suitable for accessing a dedicated network or the RAN selects an AMF in a dedicated core network to provide a network service for a public network subscriber.

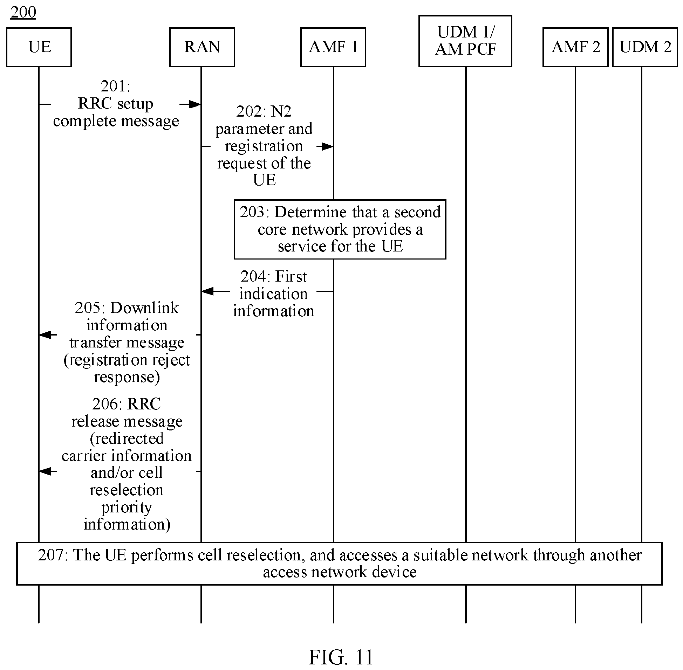

FIG. 11 shows another example 200 of a network access method according to this application.

201: A UE sends a radio resource control (radio resource control, RRC) message to a RAN.

The RRC message includes an AN parameter and a registration request of the UE. For the AN parameter and the registration request of the UE, refer to the description in step 701. Details are not described herein again.

For example, the UE may send an RRC setup complete message to the RAN after an RRC setup procedure is successfully triggered. 5G is used as an example. The RRC setup complete message may be an RRCSetupComplete message, also referred to as a message 5.

202: The RAN sends an N2 parameter and the registration request of the UE to an AMF 1.

Alternatively, step 202 may be expressed as: The RAN sends a first message to the AMF 1, where the first message includes the N2 parameter and the registration request of the UE.

For step 202, refer to step 702. Details are not described again.

203: The AMF 1 determines that a second core network provides a service for the UE.

In the foregoing embodiments, the AMF 1 represents an AMF in a first core network.

Optionally, for example, the AMF 1 determines, based on a local configuration, that the second core network provides the service for the UE. For specific implementation, refer to various possible examples in step 320. Optionally, for another example, the AMF 1 sends an access policy request to an AM PCF, receives an access policy response from the AM PCF, and further determines, based on the access policy response, that the second core network provides the service for the UE, as shown in steps 403 to 405 in the procedure shown in FIG. 10. Details are not described herein again.

204: The AMF 1 sends first indication information to the RAN, where the first indication information indicates the RAN to reroute the registration request to the second core network.

Optionally, for example, for the first indication information, refer to the descriptions in the foregoing embodiments, for example, the descriptions of the first indication information in step 320. Details are not described again.

Optionally, for another example, the first indication information may be radio access technology/frequency selection policy (radio access technology (RAT)/frequency selection policy, RFSP) index information.

For example, the AMF 1 sends a downlink NAS transport message to the RAN, where the downlink NAS transport message carries a registration reject response message and first indication information.

Optionally, for another example, the AMF 1 sends a downlink NAS transport message to the RAN, where the downlink NAS transport message carries a registration reject response message, first indication information, and RFSP index information. In this example, for the first indication information, refer to the descriptions in the foregoing embodiment, for example, the descriptions of the first indication information in step 320.

For example, the RFSP index information may be represented as an RFSP Index (index to RAT/frequency selection priority), and defines selection priorities of the UE for different access types/frequencies.

For example, the downlink NAS transport message may be represented as downlink NAS Transport, namely, DL NAS Transport.

In the foregoing example, if the downlink NAS transport message carries RFSP index information, the RAN maps the RFSP index information to a specific frequency selection parameter, and subsequently sends the frequency selection parameter to the UE for cell reselection of the UE.

205: The RAN sends a downlink information transfer message to the UE, where the downlink information transfer message carries the registration reject response message.

Specifically, the RAN sends the downlink information transfer message to the UE based on the first indication information. For example, the downlink information transfer message may be downlink InfoTransfer, namely, DL InfoTransfer.

206: The RAN sends an RRC release (RRC release) message to the UE.

Optionally, if the downlink NAS transport message in step 204 carries the RFSP index information, the RRC release message may carry the frequency selection parameter. For example, the frequency selection parameter may be indicated by redirected carrier information (redirectedCarrierInfo) information and/or cell reselection priority (cellReselectionPriorities) information in the RRC release message.

The redirected carrier information indicates the UE to attempt to camp on a specified system/frequency after exiting an RRC connected mode. The cell reselection priority information indicates a frequency priority for cell reselection.

207: The UE performs cell reselection based on the redirected carrier information and/or the cell reselection priority information, and accesses a suitable network through another access network device.

It should be understood that the reselected cell is a cell in the another access network device, and the UE accesses the suitable network based on the another access network device.

In this example, when the AMF determines, based on the decision of the AMF or the access policy response received from the AM PCF, to redirect the UE to the second core network, the downlink NAS transport message sent by the AMF to the RAN may carry the first indication information, or the first indication information and the RFSP index information, to trigger the RAN to provide the frequency selection parameter corresponding to the RFSP index information for the UE, so that the UE performs cell reselection based on the RFSP index information, to access a suitable network.

In this example, if the first AMF in the first core network determines to reject access of the UE to the first core network, the downlink NAS transport message sent to the RAN may carry the RFSP index information. The RAN maps the RFSP index information to a corresponding frequency selection parameter (for example, redirectedCarrierInfo and/or cellReselectionPriorities) and provides the frequency selection parameter to the UE for cell reselection of the UE. The UE may select another suitable access network device based on the frequency selection parameter, to access a suitable network.

The foregoing describes in detail the network access method. The following describes a communication apparatus provided in this application.

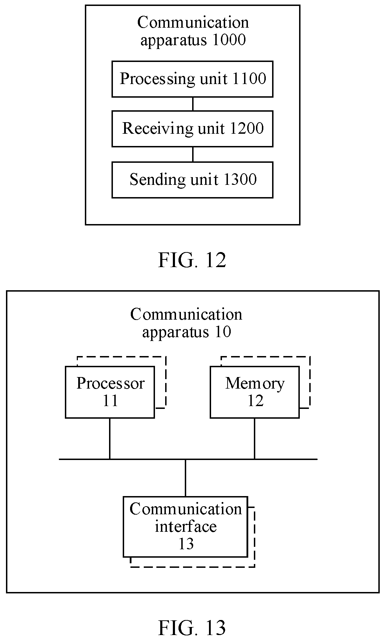

FIG. 12 is a block diagram of a communication apparatus according to this application. As shown in FIG. 12, the communication apparatus 1000 includes a processing unit 1100, a receiving unit 1200, and a sending unit 1300.

Optionally, the communication apparatus 1000 may correspond to the first AMF in embodiments of this application.

In an implementation, the communication apparatus 1000 may correspond to the first AMF in the solution 1 in the method embodiments of this application. In this implementation, the units of the communication apparatus 1000 are configured to implement the following functions:

The receiving unit 1200 is configured to receive a first message from an access network device, where the first message includes a registration request of a terminal device, and the communication apparatus belongs to a first core network.

The sending unit 1300 is configured to send a rerouting request message to the access network device based on the first message, where the rerouting request message includes first indication information, and the first indication information indicates the access network device to reroute the registration request to a second core network.

The first core network and the second core network share the access network device.

Optionally, in an embodiment, the first indication information includes one or more of the following:
an identifier of the second core network;
an identifier of a network slice of the second core network; and
an AMF set identifier, where the AMF set identifier is used by the access network device to determine the second core network.

Optionally, in an embodiment, the first message includes an identifier of the terminal device and one or more of the following:
location information of the terminal device, where the location information includes information about a tracking area TA and/or information about a cell on which the terminal device camps; and
an identifier of a network slice requested by the terminal device.

Optionally, in an embodiment, the processing unit 1100 is configured to determine, based on the identifier of the terminal device, that the first core network does not store subscription data of the terminal device.

In addition, the sending unit 1300 is configured to send the rerouting request message to the access network device.

Optionally, in an embodiment, the processing unit 1100 is configured to:
determine, based on the identifier of the terminal device, that the first core network stores subscription data of the terminal device, where the subscription data includes category information of the terminal device, and the category information indicates that the terminal device is of a public network subscriber category or a dedicated network subscriber category; and
determine, based on the category information of the terminal device included in the subscription data, that the terminal device is not of a subscriber category of the first core network.

In addition, the sending unit 1300 is configured to send the rerouting request message to the access network device.

Optionally, in an embodiment, the first message includes the identifier of the terminal device and the location information of the terminal device, and the processing unit 1100 is configured to:
determine, based on the identifier of the terminal device, that the first core network stores subscription data of the terminal device; and
determine, based on the location information of the terminal device, that the TA in the location information of the terminal device is within a TA range of the second core network or the cell in the location information is within a cell range of the second core network.

In addition, the sending unit 1300 is configured to send the rerouting request message to the access network device.

Optionally, in an embodiment, the first message includes the identifier of the terminal device and the identifier of the network slice requested by the terminal device, and the processing unit 1100 is configured to:
determine, based on the identifier of the terminal device, that the first core network stores subscription data of the terminal device; and
determine, based on the identifier of the network slice requested by the terminal device, that the network slice is provided by the second core network.

In addition, the sending unit 1300 is configured to send the rerouting request message to the access network device.

Optionally, in an embodiment, the communication apparatus is further configured with one or more of a subscriber list of the second core network, a tracking area identifier TAI list of the second core network, and a new radio cell global identifier NCGI list of the second core network.

Optionally, in an embodiment, the first AMF is configured with the subscriber list of the second core network.

The processing unit 1100 is configured to determine, based on the identifier of the terminal device and the subscriber list of the second core network, that the terminal device is a subscriber of the second core network.

The sending unit 1300 is configured to send the rerouting request message to the access network device.

Optionally, in an embodiment, the first message includes the identifier of the terminal device and the location information of the terminal device, the communication apparatus is configured with the subscriber list of the second core network and the TAI list of the second core network, and the processing unit 1100 is configured to:
determine, based on the identifier of the terminal device, that the first core network stores subscription data of the terminal device, and determining, based on the identifier of the terminal device and the subscriber list of the second core network, that the terminal device is a subscriber of the second core network; and
determine that the TA in the location information of the terminal device is included in the TAI list of the second core network.

The sending unit 1300 is configured to send the rerouting request message to the access network device.

Optionally, in an embodiment, the first message includes the identifier of the terminal device and the location information of the terminal device, and the communication apparatus is configured with the TAI list of the second core network and/or the NCGI list of the second core network, and the processing unit 1100 is configured to:
determine, based on the identifier of the terminal device, that the first core network does not store subscription data of the terminal device, and the TA in the location information of the terminal device is included in the TAI list of the second core network, or the cell in the location information of the terminal device is included in the NCGI list of the second core network.

The sending unit 1300 is configured to send the rerouting request message to the access network device.

Optionally, in an embodiment, the identifier of the terminal device includes a subscription concealed identifier SUCI, the SUCI includes an RI and an HNPK ID, the RI and/or the HNPK ID indicate/indicates a category of the terminal device, and the category of the terminal device indicates that the terminal device is of the public network subscriber category or the dedicated network subscriber category.

Optionally, in an embodiment, the subscriber list of the second core network includes a number segment of a subscriber of the second core network, and the number segment of the subscriber includes one or more of the following:
an SUPI number segment, an IMSI number segment, an RI number segment in an SUCI, or an HNPK ID number segment in the SUCI.

Optionally, in an embodiment, the first core network is a public core network, and the second core network is a dedicated core network; or the second core network is a public core network, and the first core network is a dedicated core network.

Optionally, in another implementation, the communication apparatus 1000 may alternatively correspond to the first AMF in the solution 2 or the solution 3 in the method embodiments of this application.

In this implementation, the units of the communication apparatus 1000 are configured to implement the following functions:

The receiving unit 1200 is configured to receive a first message from an access network device, where the first message includes a registration request of a terminal device, and the communication apparatus belongs to a first core network.

The sending unit 1300 is configured to send a second message to the terminal device based on the first message, where the second message is used by the terminal device to perform reselection to a second core network, or the second message indicates the terminal device to update the registration request and initiate a registration procedure based on an updated registration request.

Optionally, in an embodiment, the sending unit 1300 is configured to:
send a registration reject response message to the terminal device based on the first message, where the registration reject response message carries a reject cause value, and the reject cause value indicates the terminal device to search for a cell in a TA other than a current TA to attempt to access a network.

Optionally, in an embodiment, the sending unit 1300 is configured to:
send a registration reject response message to the terminal device based on the first message, where the registration reject response message carries information about a network slice of the second core network.

Optionally, in an embodiment, the first message includes an identifier of the terminal device and one or more of the following:
location information of the terminal device, where the location information includes information about a tracking area TA and/or information about a cell on which the terminal device camps; and
an identifier of a network slice requested by the terminal device.

Optionally, in an embodiment, the processing unit 1100 is configured to determine, based on the identifier of the terminal device, that the first core network does not store subscription data of the terminal device.

The sending unit 1300 is configured to send the second message to the terminal device.

Optionally, in an embodiment, the processing unit 1100 is configured to:
determine, based on the identifier of the terminal device, that the first core network stores subscription data of the terminal device, where the subscription data includes category information of the terminal device, and the category information indicates that the terminal device is of a public network subscriber category or a dedicated network subscriber category; and
determine, based on the category information of the terminal device included in the subscription data, that the terminal device is not of a subscriber category of the first core network.

In addition, the sending unit 1300 is configured to send the second message to the terminal device.

Optionally, in an embodiment, the first message includes the identifier of the terminal device and the location information of the terminal device, and the processing unit 1100 is configured to:
determine, based on the identifier of the terminal device, that the first core network stores subscription data of the terminal device; and
determine, based on the location information of the terminal device, that the TA in the location information of the terminal device is within a TA range of the second core network or the cell in the location information is within a cell range of the second core network.

In addition, the sending unit 1300 is configured to send the second message to the terminal device.

Optionally, in an embodiment, the first message includes the identifier of the terminal device and the identifier of the network slice requested by the terminal device, and the processing unit 1100 is configured to:
determine, based on the identifier of the terminal device, that the first core network stores subscription data of the terminal device; and
determine, based on the identifier of the network slice requested by the terminal device, that the network slice is provided by the second core network.

In addition, the sending unit 1300 is configured to send the second message to the terminal device.

Optionally, in an embodiment, the communication apparatus is further configured with one or more of a subscriber list of the second core network, a tracking area identifier TAI list of the second core network, and a new radio cell global identifier NCGI list of the second core network.

Optionally, in an embodiment, the first AMF is configured with the subscriber list of the second core network.

The processing unit 1100 is configured to determine, based on the identifier of the terminal device and the subscriber list of the second core network, that the terminal device is a subscriber of the second core network.

The sending unit 1300 is configured to send the second message to the terminal device.

Optionally, in an embodiment, the first message includes the identifier of the terminal device and the location information of the terminal device, the communication apparatus is configured with the subscriber list of the second core network and the TAI list of the second core network, and the processing unit 1100 is configured to:
determine, based on the identifier of the terminal device, that the first core network stores subscription data of the terminal device, and determining, based on the identifier of the terminal device and the subscriber list of the second core network, that the terminal device is a subscriber of the second core network; and
determine that the TA in the location information of the terminal device is included in the TAI list of the second core network.

The sending unit 1300 is configured to send the second message to the terminal device.

Optionally, in an embodiment, the first message includes the identifier of the terminal device and the location information of the terminal device, and the communication apparatus is configured with the TAI list of the second core network and/or the NCGI list of the second core network, and the processing unit 1100 is configured to:
determine, based on the identifier of the terminal device, that the first core network does not store subscription data of the terminal device, and the TA in the location information of the terminal device is included in the TAI list of the second core network, or the cell in the location information of the terminal device is included in the NCGI list of the second core network.

The sending unit 1300 is configured to send the second message to the terminal device.

Optionally, in an embodiment, the sending unit 1300 is configured to send an access policy request message to an AM PCF based on the first message, where the access policy request message is used to request to obtain a decision of accessing a network by the terminal device.

The receiving unit 1200 is configured to receive an access policy response message from the AM PCF, where the access decision response message indicates to enable the terminal device to access the second core network.

In addition, the sending unit 1300 is further configured to send a rerouting request message to the access network device based on the access policy response message.

Optionally, in an embodiment, the access policy response message carries one or more of the following information:
an identifier of the second core network;
an identifier of a network slice of the second core network;
an access and mobility management function network element set identifier, where the access and mobility management function network element set identifier is used by the access network device to determine the second core network;
a reject cause value, where the reject cause value indicates the terminal device to search for a cell in a TA other than a current TA to attempt to access a network; and
updated network slice information, where the updated network slice information includes information about the network slice of the second core network.

Optionally, in an embodiment, the identifier of the terminal device includes a subscription concealed identifier SUCI, the SUCI includes an RI and an HNPK ID, the RI and/or the HNPK ID indicate/indicates a category of the terminal device, and the category of the terminal device indicates that the terminal device is of the public network subscriber category or the dedicated network subscriber category.

Optionally, in an embodiment, the subscriber list of the second core network includes a number segment of a subscriber of the second core network, and the number segment of the subscriber includes one or more of the following:
an SUPI number segment, an IMSI number segment, an RI number segment in an SUCI, or an HNPK ID number segment in the SUCI.

Optionally, in an embodiment, the receiving unit 1200 is further configured to receive a first message from an access network device, where the first message includes a registration request of a terminal device, and the communication apparatus belongs to a first core network.

The sending unit 1300 is configured to send first indication information to the access network device based on the first message, where the first indication information indicates the access network device to reroute the registration request to a second core network.

Optionally, the first indication information is RFSP index information.

Optionally, in an embodiment, the first core network is a public core network, and the second core network is a dedicated core network; or the second core network is a public core network, and the first core network is a dedicated core network.

Optionally, the communication apparatus 1000 may correspond to the access network device in embodiments of this application, for example, the access network device in the solution 1 in the method embodiments. In this implementation, the units of the communication apparatus 1000 are configured to implement the following functions:

The receiving unit 1200 is configured to receive a rerouting request message from a first AMF, where the rerouting request message includes first indication information, the first indication information indicates the access network device to reroute a registration request to a second core network, and the first AMF belongs to a first core network.

The sending unit 1300 is configured to send a second message to a second AMF based on the first indication information, where the second message includes the registration request, and the second AMF belongs to the second core network.

Optionally, in an embodiment, the first indication information includes one or more of the following:
an identifier of the second core network;
an identifier of a network slice of the second core network; and
an AMF set identifier, where the AMF set identifier is used by the access network device to determine the second core network.

Optionally, in an embodiment, the access network device is configured with one or more of the following information:
a mapping relationship between one or more network identifiers and one or more second core networks;
a mapping relationship between an identifier of one or more network slices and one or more second core networks; and
a mapping relationship between one or more AMF set identifiers and one or more second core networks.

Optionally, in an embodiment, the processing unit 1100 is further configured to:
determine the second core network based on the mapping relationship and the first indication information; and
select the second AMF from the second core network.

Optionally, in an embodiment, the sending unit 1300 is configured to send a first message to a first AMF, where the first message includes a registration request of a terminal device, and the first AMF belongs to a first core network.

The receiving unit 1200 is configured to receive first indication information from the first AMF, where the first indication information indicates the communication apparatus to reroute the registration request to a second core network.

Optionally, the first indication information is RFSP index information.

Optionally, in an embodiment, the first core network is a public core network, and the second core network is a dedicated core network; or the second core network is a public core network, and the first core network is a dedicated core network.

Optionally, the communication apparatus 1000 may correspond to the terminal device in embodiments of this application.

In an implementation, the communication apparatus 1000 may correspond to the terminal device in the solution 2 in the method embodiments. In this implementation, the units of the communication apparatus 1000 are configured to implement the following functions:

The receiving unit 1200 is configured to receive a registration reject response message from an access network device, where the registration reject response message carries a reject cause value.

The sending unit 1300 is configured to search, based on the reject cause value, for a cell in a TA other than a current TA to attempt to access a network.

Optionally, in an embodiment, the processing unit 1100 is further configured to:
store the current TA into a permanently forbidden TA list based on the reject cause value, where the permanently forbidden TA list is cleared after the communication apparatus is restarted or a subscriber identity module SIM is replaced.

In another implementation, the communication apparatus 1000 may correspond to the terminal device in the solution 3 in the method embodiments. In this implementation, the units of the communication apparatus 1000 are configured to implement the following functions:

The receiving unit 1200 is configured to receive a registration reject response message from an access network device, where the registration reject response message carries information about a network slice of a second core network.

The processing unit 1100 is configured to re-initiate a registration procedure by using an updated registration request, where the updated registration request includes updated network slice information, and the updated network slice information includes the information about the network slice of the second core network.

Optionally, in an embodiment, the processing unit 1100 is further configured to:
store the information about the network slice of the second core network in a locally configured network slice list.

Optionally, the communication apparatus 1000 may correspond to the AM PCF in embodiments of this application.

In this implementation, the units of the communication apparatus 1000 are configured to implement the following functions:
The receiving unit 1200 is configured to receive an access policy request message from a first AMF in a first core network, where the access policy request message is used to request to obtain a policy of accessing a network by a UE.

The processing unit 1100 is configured to perform, based on the access policy request message, a decision of accessing the network by the UE, and determine that a second core network provides a service for the UE.

The sending unit 1300 is configured to send an access policy response message to the first AMF, where the access policy response message indicates to enable the UE to access the second core network.

Optionally, in an embodiment, the first core network and the second core network share an access network device, or an access network device is deployed for each of the first core network and the second core network.

Optionally, in an embodiment, the access policy response message carries one or more of the following information:
an identifier of the second core network;
an identifier of a network slice of the second core network;
an access and mobility management function network element set identifier, where the access and mobility management function network element set identifier is used by the access network device to determine the second core network;
a reject cause value, where the reject cause value indicates the terminal device to search for a cell in a TA other than a current TA to attempt to access a network; and
updated network slice information, where the updated network slice information includes information about the network slice of the second core network.

Optionally, in an embodiment, the processing unit 1100 is further configured to obtain an SUPI of the UE, and
perform, based on the SUPI of the UE, the decision of accessing the network by the UE.

Optionally, the processing unit 1100 is specifically configured to:
obtain the SUPI of the UE from the access policy request message; or
obtain an SUCI of the UE from the access policy request message, and determine, based on local configuration information, the SUPI to which the SUCI is mapped; or
obtain an SUCI of the UE from the access policy request message; the receiving unit 1200 is configured to obtain, from a UDM in the first core network, the SUPI to which the SUCI is mapped; and the processing unit 1100 obtains the SUPI from the receiving unit 1200.

Optionally, in an implementation, the sending unit 1300 is configured to send an SUCI decryption request to the UDM in the first core network, where the SUCI decryption request carries the SUCI of the UE.

The receiving unit 1200 is configured to receive an SUCI decryption response from the UDM in the first core network, where the SUCI decryption response carries the SUPI to which the SUCI is mapped.

In the foregoing implementations, the receiving unit 1200 and the sending unit 1300 may alternatively be integrated into one transceiver unit that has both a receiving function and a sending function. This is not limited herein.

In embodiments in which the communication apparatus 1000 corresponds to the first AMF, the processing unit 1100 is configured to perform processing and/or an operation, other than sending and receiving actions, implemented inside the first AMF. The receiving unit 1200 is configured to perform a receiving action performed by the first AMF, and the sending unit 1300 is configured to perform a sending action performed by the first AMF.

For example, in FIG. 3, the receiving unit 1200 performs the receiving action in step 310, and the sending unit 1300 performs the sending action in step 320.

For another example, in FIG. 5, the receiving unit 1200 performs the receiving action in step 510, and the sending unit 1300 performs the sending action in step 520.

For another example, in FIG. 6, the receiving unit 1200 performs the receiving action in step 610, and the sending unit 1300 performs the sending action in step 620.

For another example, in FIG. 11, the receiving unit 1200 performs the receiving action in step 202, and the sending unit 1300 performs the sending action in step 204. The processing unit 1100 performs step 203 and the like.

In embodiments in which the communication apparatus 1000 corresponds to the access network device, the processing unit 1100 is configured to perform processing and/or an operation, other than sending and receiving actions, implemented inside the access network device. The receiving unit 1200 is configured to perform a receiving action performed by the access network device, and the sending unit 1300 is configured to perform a sending action performed by the access network device.

For example, in FIG. 3, the sending unit 1300 is configured to perform the sending actions in step 310 and step 330, and the receiving unit 1200 is configured to perform the receiving action in step 320.

For another example, in FIG. 5, the sending unit 1300 is configured to perform the sending action in step 510.

For another example, in FIG. 6, the sending unit 1300 is configured to perform the sending action in step 610.

For another example, in FIG. 11, the receiving unit 1200 is configured to perform the receiving actions in step 201 and step 204, and the sending unit 1300 is configured to perform the sending actions in step 202, step 205, and step 206, and the like.

In embodiments in which the communication apparatus 1000 corresponds to the terminal device, the processing unit 1100 is configured to perform processing and/or an operation, other than sending and receiving actions, implemented inside the terminal device. The receiving unit 1200 is configured to perform a receiving action performed by the terminal device, and the sending unit 1300 is configured to perform a sending action performed by the terminal device.

For example, in FIG. 5, the receiving unit 1200 is configured to perform the receiving action in step 520, and the processing unit 1100 is configured to perform step 530.

For example, in FIG. 6, the receiving unit 1200 is configured to perform the receiving action in step 620, and the processing unit 1100 is configured to perform step 630 and step 640. In this case, the communication apparatus 1000 may further include a storage unit 1400, configured to store a locally configured network slice list.

In embodiments in which the communication apparatus 1000 corresponds to the AM PCF, the processing unit 1100 is configured to perform processing and/or an operation, other than sending and receiving actions, implemented inside the AM PCF. The receiving unit 1200 is configured to perform a receiving action performed by the AM PCF, and the sending unit 1300 is configured to perform a sending action performed by the AM PCF.

For example, in FIG. 10, the receiving unit 1200 performs the receiving action in step 403, the sending unit 1300 performs the sending action in step 405, and the processing unit 1100 performs step 404. Optionally, the processing unit 1100 is further configured to perform an operation a/c shown in the dashed-line box in FIG. 10, the sending unit 1300 performs the action of sending the SUCI decoding request in the operation b, and the receiving unit 1200 performs the action of receiving the SUCI decryption response in the operation b.

FIG. 13 is a diagram of a structure of a communication apparatus according to this application. As shown in FIG. 13, the communication apparatus 10 includes one or more processors 11, one or more memories 12, and one or more communication interfaces 13. The processor 11 is configured to control the communication interface 13 to receive/send a signal, the memory 12 is configured to store a computer program, and the processor 11 is configured to: invoke the computer program from the memory 12, and run the computer program, to enable the communication apparatus 10 to perform processing performed by the first AMF, the access network device, the AM PCF, or the terminal device in the method embodiments of this application.

For example, the processor 11 may have a function of the processing unit 1100 shown in FIG. 12, and the communication interface 13 may have a function of the receiving unit 1200 and/or a function of the sending unit 1300 shown in FIG. 12. Specifically, the processor 11 may be configured to perform processing or an operation performed inside the communication apparatus, and the communication interface 13 is configured to perform a sending and/or receiving operation performed by the communication apparatus.

Optionally, in an implementation, the communication apparatus 10 may be the network device in the method embodiments, for example, the first AMF, the access network device, or the AM PCF. In this implementation, the communication interface 13 may be a transceiver of the network device. The transceiver may include a receiver and/or a transmitter. Optionally, the processor 11 may be a baseband apparatus of the network device, and the communication interface 13 may be a radio frequency apparatus.

In another implementation, the communication apparatus 10 may be a chip (or a chip system) installed in the network device. In this implementation, the communication interface 13 may be an interface circuit or an input/output interface.

Optionally, in an implementation, the communication apparatus 10 may be the terminal device in the method embodiments. In this implementation, the communication interface 13 may be a transceiver of the terminal device. The transceiver may include a receiver and/or a transmitter. Optionally, the processor 11 may be a baseband apparatus of the terminal device, and the communication interface 13 may be a radio frequency apparatus.

In another implementation, the communication apparatus 10 may be a chip (or a chip system) installed in the terminal device. In this implementation, the communication interface 13 may be an interface circuit or an input/output interface.

In FIG. 13, a dashed-line box behind a component (for example, the processor, the memory, or the communication interface) indicates that there may be at least one component.

In addition, this application further provides a computer-readable storage medium. The computer-readable storage medium stores computer instructions. When the computer instructions are run on a computer, an operation and/or processing performed by the first AMF in the method embodiments of this application is performed.

This application further provides a computer-readable storage medium. The computer-readable storage medium stores computer instructions. When the computer instructions are run on a computer, an operation and/or processing performed by the access network device in the method embodiments of this application is performed.

This application further provides a computer-readable storage medium. The computer-readable storage medium stores computer instructions. When the computer instructions are run on a computer, an operation and/or processing performed by the AM PCF in the method embodiments of this application is performed.

This application further provides a computer-readable storage medium. The computer-readable storage medium stores computer instructions. When the computer instructions are run on a computer, an operation and/or processing performed by the terminal device in the method embodiments of this application is performed.

This application further provides a computer program product. The computer program product includes computer program code or instructions. When the computer program code or the instructions are run on a computer, an operation and/or processing performed by the first AMF in the method embodiments of this application is performed.

This application further provides a computer program product. The computer program product includes computer program code or instructions. When the computer program code or the instructions are run on a computer, an operation and/or processing performed by the access network device in the method embodiments of this application is performed.

This application further provides a computer program product. The computer program product includes computer program code or instructions. When the computer program code or the instructions are run on a computer, an operation and/or processing performed by the AM PCF in the method embodiments of this application is performed.

This application further provides a computer program product. The computer program product includes computer program code or instructions. When the computer program code or the instructions are run on a computer, an operation and/or processing performed by the terminal device in the method embodiments of this application is performed.

This application further provides a chip. The chip includes a processor. A memory configured to store a computer program is disposed independent of the chip. The processor is configured to execute the computer program stored in the memory, to enable a communication apparatus in which the chip is installed to perform an operation and/or processing performed by the first AMF in any method embodiment.

This application further provides a chip. The chip includes a processor. A memory configured to store a computer program is disposed independent of the chip. The processor is configured to execute the computer program stored in the memory, to enable a communication apparatus in which the chip is installed to perform an operation and/or processing performed by the access network device in any method embodiment.

This application further provides a chip. The chip includes a processor. A memory configured to store a computer program is disposed independent of the chip. The processor is configured to execute the computer program stored in the memory, to enable a communication apparatus in which the chip is installed to perform an operation and/or processing performed by the AM PCF in any method embodiment.

This application further provides a chip. The chip includes a processor. A memory configured to store a computer program is disposed independent of the chip. The processor is configured to execute the computer program stored in the memory, to enable a communication apparatus in which the chip is installed to perform an operation and/or processing performed by the terminal device in any method embodiment.

Further, the chip may further include a communication interface. The communication interface may be an input/output interface, an interface circuit, or the like. Further, the chip may further include the memory.

Optionally, there may be one or more processors, there may be one or more memories, and there may be one or more memories.

This application further provides a communication apparatus (for example, may be a chip or a chip system), including a processor and a communication interface. The communication interface is configured to receive (in other words, input) data and/or information, and transmit the received data and/or information to the processor. The processor processes the data and/or the information. In addition, the communication interface is further configured to output (in other words, output) data and/or information obtained through processing by the processor, so that an operation and/or processing performed by the first AMF in any method embodiment is performed.

This application further provides a communication apparatus (for example, may be a chip or a chip system), including a processor and a communication interface. The communication interface is configured to receive (in other words, input) data and/or information, and transmit the received data and/or information to the processor. The processor processes the data and/or the information. In addition, the communication interface is further configured to output (in other words, output) data and/or information obtained through processing by the processor, so that an operation and/or processing performed by the access network device in any method embodiment is performed.

This application further provides a communication apparatus (for example, may be a chip or a chip system), including a processor and a communication interface. The communication interface is configured to receive (in other words, input) data and/or information, and transmit the received data and/or information to the processor. The processor processes the data and/or the information. In addition, the communication interface is further configured to output (in other words, output) data and/or information obtained through processing by the processor, so that an operation and/or processing performed by the AM PCF in any method embodiment is performed.

This application further provides a communication apparatus (for example, may be a chip or a chip system), including a processor and a communication interface. The communication interface is configured to receive (in other words, input) data and/or information, and transmit the received data and/or information to the processor. The processor processes the data and/or the information. In addition, the communication interface is further configured to output (in other words, output) data and/or information obtained through processing by the processor, so that an operation and/or processing performed by the terminal device in any method embodiment is performed.

This application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by the first AMF in any method embodiment.

This application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by the access network device in any method embodiment.

This application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by the AM PCF in any method embodiment.

This application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by the terminal device in any method embodiment.

This application further provides a wireless communication system, including the first AMF and the access network device in the solution 1 in the method embodiments of this application, or including the first AMF, the access network device, and the AM PCF shown in FIG. 10, or including the first AMF and the terminal device in the solution 2 in the method embodiments, or including the first AMF and the terminal device in the solution 3 in the method embodiments. In addition, the wireless communication system may further include another network device or terminal device. This is not limited.

The processor in embodiments of this application may be an integrated circuit chip, and has a signal processing capability. In an implementation process, the steps in the foregoing method embodiments may be completed by using a hardware integrated logic circuit in the processor or instructions in a form of software. The processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor, or the like. The steps of the methods disclosed in embodiments of this application may be directly performed by a hardware encoding processor, or may be performed by a combination of hardware and a software module in an encoding processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in embodiments of this application may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

All or some of the methods provided in the foregoing embodiments may be implemented by using software, hardware, firmware, or any combination thereof. When software is used to implement the methods, all or some of the methods may be implemented in a form of a computer program product. The computer program product may include one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media.

The term "and/or" in this application is merely an association relationship for describing associated objects, and indicates that three relationships may exist. For example, A and/or B may represent: Only A exists, both A and B exist, and only B exists. A, B, and C may all be singular or plural, and are not limited.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A network access method (200, 300, 700), comprising:
receiving (202, 310, 702), by a first access and mobility management function network element, a first message from an access network device, wherein the first message comprises a registration request of a terminal device, and the first access and mobility management function network element belongs to a first core network; and
sending (204, 320, 704), by the first access and mobility management function network element, a rerouting request message to the access network device based on the first message, wherein the rerouting request message comprises first indication information, and the first indication information indicates the access network device to reroute the registration request to a second core network, wherein
the first core network and the second core network share the access network device.

2. The method (200, 300, 700) according to claim 1, wherein the first indication information comprises one or more of the following:
an identifier of the second core network;
an identifier of a network slice of the second core network; and
an access and mobility management function network element set identifier, wherein the access and mobility management function network element set identifier is used by the access network device to determine the second core network.

3. The method (200, 300, 700) according to claim 1 or 2, wherein the first message comprises an identifier of the terminal device and one or more of the following:
location information of the terminal device, wherein the location information comprises information about a tracking area and/or information about a cell on which the terminal device camps; and
an identifier of a network slice requested by the terminal device.

4. The method (200, 300, 700) according to claim 3, wherein the sending (204, 320, 704), by the first access and mobility management function network element, a rerouting request message to the access network device based on the first message comprises:
sending, by the first access and mobility management function network element, the rerouting request message to the access network device when the first access and mobility management function network element determines, based on the identifier of the terminal device, that the first core network does not store subscription data of the terminal device.

5. The method (200, 300, 700) according to claim 3, wherein the sending (204, 320, 704), by the first access and mobility management function network element, a rerouting request message to the access network device based on the first message comprises:
determining, by the first access and mobility management function network element based on the identifier of the terminal device, that the first core network stores subscription data of the terminal device, wherein the subscription data comprises category information of the terminal device, and the category information indicates that the terminal device is of a public network subscriber category or a dedicated network subscriber category; and
sending, by the first access and mobility management function network element, the rerouting request message to the access network device when determining, based on the category information of the terminal device comprised in the subscription data, that the terminal device is not of a subscriber category of the first core network.

6. The method (200, 300, 700) according to claim 3, wherein the first message comprises the identifier of the terminal device and the location information of the terminal device; and
the sending (204, 320, 704), by the first access and mobility management function network element, a rerouting request message to the access network device based on the first message comprises:
determining, by the first access and mobility management function network element based on the identifier of the terminal device, that the first core network stores subscription data of the terminal device; and
sending, by the first access and mobility management function network element, the rerouting request message to the access network device when the first access and mobility management function network element determines, based on the location information of the terminal device, that the TA in the location information of the terminal device is within a tracking area range of the second core network or the cell in the location information is within a cell range of the second core network.

7. The method (200, 300, 700) according to claim 3, wherein the first message comprises the identifier of the terminal device and the identifier of the network slice requested by the terminal device; and
the sending (204, 320, 704), by the first access and mobility management function network element, a rerouting request message to the access network device based on the first message comprises:
determining, by the first access and mobility management function network element based on the identifier of the terminal device, that the first core network stores subscription data of the terminal device; and
sending, by the first access and mobility management function network element, the rerouting request message to the access network device when the first access and mobility management function network element determines, based on the identifier of the network slice requested by the terminal device, that the network slice is provided by the second core network.

8. The method (200, 300, 700) according to claim 3, wherein the first access and mobility management function network element is further configured with one or more of a subscriber list of the second core network, a tracking area identifier list of the second core network, and a new radio cell global identifier list of the second core network.

9. The method (200, 300, 700) according to claim 8, wherein the first access and mobility management function network element is configured with the subscriber list of the second core network; and
the sending (204, 320, 704), by the first access and mobility management function network element, a rerouting request message to the access network device based on the first message comprises:
sending, by the first access and mobility management function network element, the rerouting request message to the access network device when determining, based on the identifier of the terminal device and the subscriber list of the second core network, that the terminal device is a subscriber of the second core network.

10. The method (200, 300, 700) according to claim 8, wherein the first message comprises the identifier of the terminal device and the location information of the terminal device, and the first access and mobility management function network element is configured with the subscriber list of the second core network and the tracking area identifier list of the second core network; and
the sending (204, 320, 704), by the first access and mobility management function network element, a rerouting request message to the access network device based on the first message comprises:
determining, by the first access and mobility management function network element based on the identifier of the terminal device, that the first core network stores subscription data of the terminal device, and determining, based on the identifier of the terminal device and the subscriber list of the second core network, that the terminal device is a subscriber of the second core network; and
sending, by the first access and mobility management function network element, the rerouting request message to the access network device when the tracking area in the location information of the terminal device is comprised in the tracking area identifier list of the second core network.

11. The method (200, 300, 700) according to claim 8, wherein the first message comprises the identifier of the terminal device and the location information of the terminal device, and the first access and mobility management function network element is configured with the tracking area identifier list of the second core network and/or the new radio cell global identifier list of the second core network; and
the sending (204, 320, 704), by the first access and mobility management function network element, a rerouting request message to the access network device based on the first message comprises:
determining, by the first access and mobility management function network element based on the identifier of the terminal device, that the first core network does not store subscription data of the terminal device; and sending, by the first access and mobility management function network element, the rerouting request message to the access network device when the tracking area in the location information of the terminal device is comprised in the tracking area identifier list of the second core network, or the cell in the location information of the terminal device is comprised in the new radio cell global identifier list of the second core network.

12. The method (200, 300, 700) according to any one of claims 1 to 3, wherein the sending (204, 320, 704), by the first access and mobility management function network element, a rerouting request message to the access network device based on the first message comprises:
sending (403), by the first access and mobility management function network element, an access policy request message to an access and mobility policy control service network element based on the first message, wherein the access policy request message is used to request to obtain a decision of accessing a network by the terminal device;
receiving (405), by the first access and mobility management function network element, an access policy response message from the access and mobility policy control service network element, wherein the access policy response message indicates to enable the terminal device to access the second core network; and
sending, by the first access and mobility management function network element, the rerouting request message to the access network device based on the access policy response message;
wherein the access policy response message carries one or more of the following information:
the identifier of the second core network;
the identifier of the network slice of the second core network;
the access and mobility management function network element set identifier, wherein the access and mobility management function network element set identifier is used by the access network device to determine the second core network;
a reject cause value, wherein the reject cause value indicates the terminal device to search for a cell in a TA other than the current TA to attempt to access a network; and
updated network slice information, wherein the updated network slice information comprises information about the network slice of the second core network.

13. The method (200, 300, 700) according to any one of claims 3 to 12, wherein the identifier of the terminal device comprises a subscription concealed identifier, the subscription concealed identifier comprises a routing identifier and a home network public key identifier, the routing identifier and/or the home network public key identifier indicate/indicates a category of the terminal device, and the category of the terminal device indicates that the terminal device is of the public network subscriber category or the dedicated network subscriber category.

14. The method (200, 300, 700) according to any one of claims 8 to 11, wherein the subscriber list of the second core network comprises a number segment of a subscriber of the second core network, and the number segment of the subscriber comprises one or more of the following:
a subscription permanent identifier number segment, an international mobile subscriber identifier number segment, a routing identifier number segment in a subscription concealed identifier, or a home network public key identifier number segment in the subscription concealed identifier.

15. A communication apparatus (10), comprising at least one processor (11), wherein the at least one processor is coupled to at least one memory (12), and the at least one processor is configured to execute a computer program or instructions stored in the at least one memory, to cause the communication apparatus to perform the method according to any one of claims 1 to 14.

## Patentansprüche

1. Netzwerkzugangsverfahren (200, 300, 700), umfassend:
Empfangen (202, 310, 702) einer ersten Nachricht von einer Zugangsnetzwerkeinrichtung durch ein erstes Zugangs- und Mobilitätsverwaltungsfunktionsnetzwerkelement, wobei die erste Nachricht eine Registrierungsanfrage eines Endgeräts umfasst und das erste Zugangs- und Mobilitätsverwaltungsfunktionsnetzwerkelement zu einem ersten Kernnetzwerk gehört; und
Senden (204, 320, 704) einer Umleitungsanfragenachricht an die Zugangsnetzwerkeinrichtung durch das erste Zugangs- und Mobilitätsverwaltungsfunktionsnetzwerkelement basierend auf der ersten Nachricht, wobei die Umleitungsanfragenachricht erste Angabeinformationen umfasst und die ersten Angabeinformationen der Zugangsnetzwerkeinrichtung angeben, die Registrierungsanfrage an ein zweites Kernnetzwerk umzuleiten, wobei
das erste Kernnetzwerk und das zweite Kernnetzwerk die Zugangsnetzwerkeinrichtung gemeinsam nutzen.

2. Verfahren (200, 300, 700) nach Anspruch 1, wobei die ersten Angabeinformationen eines oder mehrere von Folgenden umfassen:
eine Kennung des zweiten Kernnetzwerks;
eine Kennung eines Netzwerk-Slice des zweiten Kernnetzwerks; und eine Kennung eines Zugangs- und Mobilitätsverwaltungsfunktionsnetzwerkelementsatzes, wobei die Kennung eines Zugangs- und Mobilitätsverwaltungsfunktionsnetzwerkelementsatzes durch die Zugangsnetzwerkeinrichtung verwendet wird, um das zweite Kernnetzwerk zu bestimmen.

3. Verfahren (200, 300, 700) nach Anspruch 1 oder 2, wobei die erste Nachricht eine Kennung des Endgeräts und eines oder mehrere von Folgenden umfasst:
Standortinformationen des Endgeräts, wobei die Standortinformationen Informationen über einen Verfolgungsbereich und/oder Informationen über eine Zelle, in der das Endgerät campt, umfassen; und
eine Kennung eines durch das Endgerät angefragten Netzwerk-Slice.

4. Verfahren (200, 300, 700) nach Anspruch 3, wobei das Senden (204, 320, 704) einer Umleitungsanfragenachricht durch das erste Zugangs- und Mobilitätsverwaltungsfunktionsnetzwerkelement an die Zugangsnetzwerkeinrichtung basierend auf der ersten Nachricht Folgendes umfasst:
Senden der Umleitungsanfragenachricht durch das erste Zugangs- und Mobilitätsverwaltungsfunktionsnetzwerkelement an die Zugangsnetzwerkeinrichtung, wenn das erste Zugangs- und Mobilitätsverwaltungsfunktionsnetzwerkelement basierend auf der Kennung des Endgeräts bestimmt, dass das erste Kernnetzwerk keine Teilnahmedaten des Endgeräts speichert.

5. Verfahren (200, 300, 700) nach Anspruch 3, wobei das Senden (204, 320, 704) einer Umleitungsanfragenachricht durch das erste Zugangs- und Mobilitätsverwaltungsfunktionsnetzwerkelement an die Zugangsnetzwerkeinrichtung basierend auf der ersten Nachricht Folgendes umfasst:
Bestimmen, durch das erste Zugangs- und Mobilitätsverwaltungsfunktionsnetzwerkelement basierend auf der Kennung des Endgeräts, dass das erste Kernnetzwerk Teilnahmedaten des Endgeräts speichert, wobei die Teilnahmedaten Kategorieinformationen des Endgeräts umfassen und die Kategorieinformationen angeben, dass das Endgerät einer öffentlichen Netzwerkteilnehmerkategorie oder einer dedizierten Netzwerkteilnehmerkategorie angehört; und
Senden der Umleitungsanfragenachricht durch das erste Zugangs- und Mobilitätsverwaltungsfunktionsnetzwerkelement an die Zugangsnetzwerkeinrichtung, wenn basierend auf den in den Teilnahmedaten umfassten Kategorieinformationen bestimmt ist, dass das Endgerät nicht einer Teilnehmerkategorie des ersten Kernnetzwerkes angehört.

6. Verfahren (200, 300, 700) nach Anspruch 3, wobei die erste Nachricht die Kennung des Endgeräts und die Standortinformationen des Endgeräts umfasst; und
das Senden (204, 320, 704) einer Umleitungsanfragenachricht durch das erste Zugangs- und Mobilitätsverwaltungsfunktionsnetzwerkelement an die Zugangsnetzwerkeinrichtung basierend auf der ersten Nachricht Folgendes umfasst:
Bestimmen durch das erste Zugangs- und Mobilitätsverwaltungsfunktionsnetzwerkelement basierend auf der Kennung des Endgeräts, dass das erste Kernnetzwerk die Teilnahmedaten des Endgeräts speichert; und
Senden der Umleitungsanfragenachricht durch das erste Zugangs- und Mobilitätsverwaltungsfunktionsnetzwerkelement an die Zugangsnetzwerkeinrichtung, wenn das erste Zugangs- und Mobilitätsverwaltungsfunktionsnetzwerkelement basierend auf den Standortinformationen des Endgeräts bestimmt, dass sich der TA in den Standortinformationen des Endgeräts innerhalb eines Verfolgungsbereichs des zweiten Kernnetzwerkes befindet oder dass sich die Zelle in den Standortinformationen innerhalb eines Zellbereichs des zweiten Kernnetzwerkes befindet.

7. Verfahren (200, 300, 700) nach Anspruch 3, wobei die erste Nachricht die Kennung des Endgeräts und die Kennung des durch das Endgerät angefragten Netzwerk-Slice umfasst; und
das Senden (204, 320, 704) einer Umleitungsanfragenachricht durch das erste Zugangs- und Mobilitätsverwaltungsfunktionsnetzwerkelement an die Zugangsnetzwerkeinrichtung basierend auf der ersten Nachricht Folgendes umfasst:
Bestimmen durch das erste Zugangs- und Mobilitätsverwaltungsfunktionsnetzwerkelement basierend auf der Kennung des Endgeräts, dass das erste Kernnetzwerk die Teilnahmedaten des Endgeräts speichert; und
Senden der Umleitungsanfragenachricht durch das erste Zugangs- und Mobilitätsverwaltungsfunktionsnetzwerkelement an die Zugangsnetzwerkeinrichtung, wenn das erste Zugangs- und Mobilitätsverwaltungsfunktionsnetzwerkelement basierend auf der Kennung des durch das Endgerät angefragten Netzwerk-Slice bestimmt, dass das Netzwerk-Slice durch das zweite Kernnetzwerk bereitgestellt wird.

8. Verfahren (200, 300, 700) nach Anspruch 3, wobei das erste Zugangs- und Mobilitätsverwaltungsfunktionsnetzwerkelement ferner mit einer oder mehreren von einer Teilnehmerliste des zweiten Kernnetzwerkes, einer Liste von Verfolgungsbereichskennungen des zweiten Kernnetzwerkes und einer Liste von globalen Kennungen der New-Radio-Zellen des zweiten Kernnetzwerkes konfiguriert ist.

9. Verfahren (200, 300, 700) nach Anspruch 8, wobei das erste Zugangs- und Mobilitätsverwaltungsfunktionsnetzwerkelement mit der Teilnehmerliste des zweiten Kernnetzwerkes konfiguriert ist; und
das Senden (204, 320, 704) einer Umleitungsanfragenachricht durch das erste Zugangs- und Mobilitätsverwaltungsfunktionsnetzwerkelement an die Zugangsnetzwerkeinrichtung basierend auf der ersten Nachricht Folgendes umfasst:
Senden der Umleitungsanfragenachricht durch das erste Zugangs- und Mobilitätsverwaltungsfunktionsnetzwerkelement an die Zugangsnetzwerkeinrichtung, wenn basierend auf der Kennung des Endgeräts und der Teilnehmerliste des zweiten Kernnetzwerkes bestimmt ist, dass das Endgerät ein Teilnehmer des zweiten Kernnetzwerkes ist.

10. Verfahren (200, 300, 700) nach Anspruch 8, wobei die erste Nachricht die Kennung des Endgeräts und die Standortinformationen des Endgeräts umfasst und das erste Zugangs- und Mobilitätsverwaltungsfunktionsnetzwerkelement mit der Teilnehmerliste des zweiten Kernnetzwerkes und der Liste der Verfolgungsbereichskennungen des zweiten Kernnetzwerkes konfiguriert ist; und
das Senden (204, 320, 704) einer Umleitungsanfragenachricht durch das erste Zugangs- und Mobilitätsverwaltungsfunktionsnetzwerkelement an die Zugangsnetzwerkeinrichtung basierend auf der ersten Nachricht Folgendes umfasst:
Bestimmen, durch das erste Zugangs- und Mobilitätsverwaltungsfunktionsnetzwerkelement basierend auf der Kennung des Endgeräts, dass das erste Kernnetzwerk Teilnahmedaten des Endgeräts speichert, und Bestimmen, basierend auf der Kennung des Endgeräts und der Teilnehmerliste des zweiten Kernnetzwerkes, dass das Endgerät ein Teilnehmer des zweiten Kernnetzwerkes ist; und
Senden, durch das erste Zugangs- und Mobilitätsverwaltungsfunktionsnetzwerkelement, der Umleitungsanfragenachricht an die Zugangsnetzwerkeinrichtung, wenn der Verfolgungsbereich in den Standortinformationen des Endgeräts in der Liste der Verfolgungsbereichskennungen des zweiten Kernnetzwerkes umfasst ist.

11. Verfahren (200, 300, 700) nach Anspruch 8, wobei die erste Nachricht die Kennung des Endgeräts und die Standortinformationen des Endgeräts umfasst und das erste Zugangs- und Mobilitätsverwaltungsfunktionsnetzwerkelement mit der Liste der Verfolgungsbereichskennungen des zweiten Kernnetzwerkes und/oder der Liste der globalen Kennungen der New-Radio-Zellen des zweiten Kernnetzwerkes konfiguriert ist; und
das Senden (204, 320, 704) einer Umleitungsanfragenachricht durch das erste Zugangs- und Mobilitätsverwaltungsfunktionsnetzwerkelement an die Zugangsnetzwerkeinrichtung basierend auf der ersten Nachricht Folgendes umfasst:
Bestimmen, durch das erste Zugangs- und Mobilitätsverwaltungsfunktionsnetzwerkelement basierend auf der Kennung des Endgeräts, dass das erste Kernnetzwerk keine Teilnahmedaten des Endgeräts speichert; und Senden, durch das erste Zugangs- und Mobilitätsverwaltungsfunktionsnetzwerkelement der Umleitungsanfragenachricht an die Zugangsnetzwerkeinrichtung, wenn der Verfolgungsbereich in den Standortinformationen des Endgeräts in der Liste der Verfolgungsbereichskennungen des zweiten Kernnetzwerkes umfasst ist oder die Zelle in den Standortinformationen des Endgeräts in der Liste der globalen Kennungen der New-Radio-Zellen des zweiten Kernnetzwerkes umfasst ist.

12. Verfahren (200, 300, 700) nach einem der Ansprüche 1 bis 3, wobei das Senden (204, 320, 704) einer Umleitungsanfragenachricht durch das erste Zugangs- und Mobilitätsverwaltungsfunktionsnetzwerkelement an die Zugangsnetzwerkeinrichtung basierend auf der ersten Nachricht Folgendes umfasst:
Senden (403) einer Zugangsrichtlinien-Anfragenachricht durch das erste Zugangs- und Mobilitätsverwaltungsfunktionsnetzwerkelement an ein Zugangs- und Mobilitätsrichtlinien-Kontrolldienstnetzwerkelement basierend auf der ersten Nachricht, wobei die Zugangsrichtlinien-Anfragenachricht dazu verwendet wird, anzufragen, eine Entscheidung über einen Zugang zu einem Netzwerk durch das Endgerät zu erlangen;
Empfangen (405) einer Zugangsrichtlinien-Antwortnachricht durch das erste Zugangs- und Mobilitätsverwaltungsfunktionsnetzwerkelement von dem Zugangs- und Mobilitätsrichtlinien-Kontrolldienstnetzwerkelement, wobei die Zugangsrichtlinien-Antwortnachricht angibt, das Endgerät zu befähigen, Zugang zum zweiten Kernnetzwerk zu haben; und
Senden der Umleitungsanfragenachricht durch das erste Zugangs- und Mobilitätsverwaltungsfunktionsnetzwerkelement an die Zugangsnetzwerkeinrichtung basierend auf der Zugangsrichtlinien-Antwortnachricht;
wobei die Zugangsrichtlinien-Antwortnachricht eine oder mehrere der folgenden Informationen enthält:
die Kennung des zweiten Kernnetzwerks;
die Kennung des Netzwerk-Slice des zweiten Kernnetzwerks;
die Kennung eines Zugangs- und Mobilitätsverwaltungsfunktionsnetzwerkelementsatzes, wobei die Kennung eines Zugangs- und Mobilitätsverwaltungsfunktionsnetzwerkelementsatzes durch die Zugangsnetzwerkeinrichtung verwendet wird, um das zweite Kernnetzwerk zu bestimmen;
einen Wert für die Ablehnungsursache, wobei der Wert für die Ablehnungsursache dem Endgerät angibt, nach einer Zelle in einem anderen TA als dem aktuellen TA zu suchen, um zu versuchen, Zugang zu einem Netzwerk zu haben; und
aktualisierte Netzwerk-Slice-Informationen, wobei die aktualisierten Netzwerk-Slice-Informationen Informationen über den Netzwerk-Slice des zweiten Kernnetzwerks umfassen.

13. Verfahren (200, 300, 700) nach einem der Ansprüche 3 bis 12, wobei die Kennung des Endgeräts eine verborgene Teilnahmekennung umfasst, die verborgene Teilnahmekennung eine Routing-Kennung und eine Kennung für den öffentlichen Schlüssel des Heimnetzwerks umfasst, die Routing-Kennung und/oder die Kennung für den öffentlichen Schlüssel des Heimnetzwerks eine Kategorie des Endgeräts angibt/angeben und die Kategorie des Endgeräts angibt, dass das Endgerät der öffentlichen Netzwerkteilnehmerkategorie oder der dedizierten Netzwerkteilnehmerkategorie angehört.

14. Verfahren (200, 300, 700) nach einem der Ansprüche 8 bis 11, wobei die Teilnehmerliste des zweiten Kernnetzwerkes ein Nummernsegment eines Teilnehmers des zweiten Kernnetzwerkes umfasst und das Nummernsegment des Teilnehmers eines oder mehrere von Folgenden umfasst:
ein Nummernsegment der permanenten Teilnahmekennung, ein Nummernsegment der internationalen Mobilfunkteilnehmerkennung, ein Nummernsegment der Routing-Kennung in einer verborgenen Teilnahmekennung oder ein Nummernsegment der Kennung für den öffentlichen Schlüssel des Heimnetzwerks in der verborgenen Teilnahmekennung.

15. Kommunikationsvorrichtung (10), umfassend mindestens einen Prozessor (11), wobei der mindestens eine Prozessor mit mindestens einem Speicher (12) gekoppelt ist und der mindestens eine Prozessor dazu konfiguriert ist, ein Computerprogramm oder Anweisungen, das/die in dem mindestens einen Speicher gespeichert ist/sind, auszuführen, um die Kommunikationsvorrichtung dazu zu veranlassen, das Verfahren nach einem der Ansprüche 1 bis 14 durchzuführen.

## Revendications

1. Procédé d'accès au réseau (200, 300, 700), comprenant :
la réception (202, 310, 702), par un premier élément de réseau de fonction de gestion d'accès et de mobilité, d'un premier message provenant d'un dispositif de réseau d'accès, dans lequel le premier message comprend une demande d'enregistrement d'un dispositif terminal, et le premier élément de réseau de fonction de gestion d'accès et de mobilité appartient à un premier réseau central ; et
l'envoi (204, 320, 704), par le premier élément de réseau de fonction de gestion d'accès et de mobilité, d'un message de demande de réacheminement au dispositif de réseau d'accès sur la base du premier message, dans lequel le message de demande de réacheminement comprend des premières informations d'indication, et les premières informations d'indication indiquent au dispositif de réseau d'accès de réacheminer la demande d'enregistrement vers un second réseau central, dans lequel
le premier réseau central et le second réseau central partagent le dispositif de réseau d'accès.

2. Procédé (200, 300, 700) selon la revendication 1, dans lequel les premières informations d'indication comprennent un ou plusieurs des éléments suivants :
un identifiant du second réseau central ;
un identifiant d'une tranche de réseau du second réseau central ; et
un identifiant d'ensemble d'éléments de réseau de fonction de gestion d'accès et de mobilité, dans lequel l'identifiant d'ensemble d'éléments de réseau de fonction de gestion d'accès et de mobilité est utilisé par le dispositif de réseau d'accès pour déterminer le second réseau central.

3. Procédé (200, 300, 700) selon la revendication 1 ou 2, dans lequel le premier message comprend un identifiant du dispositif terminal et un ou plusieurs des éléments suivants :
des informations de localisation du dispositif terminal, dans lequel les informations de localisation comprennent des informations à propos d'une zone de suivi et/ou des informations à propos d'une cellule sur laquelle campe le dispositif terminal ; et
un identifiant d'une tranche de réseau demandée par le dispositif terminal.

4. Procédé (200, 300, 700) selon la revendication 3, dans lequel l'envoi (204, 320, 704), par le premier élément de réseau de fonction de gestion d'accès et de mobilité, d'un message de demande de réacheminement au dispositif de réseau d'accès sur la base du premier message comprend :
l'envoi, par le premier élément de réseau de fonction de gestion d'accès et de mobilité, du message de demande de réacheminement au dispositif de réseau d'accès lorsque le premier élément de réseau de fonction de gestion d'accès et de mobilité détermine, sur la base de l'identifiant du dispositif terminal, que le premier réseau central ne stocke pas de données d'abonnement du dispositif terminal.

5. Procédé (200, 300, 700) selon la revendication 3, dans lequel l'envoi (204, 320, 704), par le premier élément de réseau de fonction de gestion d'accès et de mobilité, d'un message de demande de réacheminement au dispositif de réseau d'accès sur la base du premier message comprend :
la détermination, par le premier élément de réseau de fonction de gestion d'accès et de mobilité sur la base de l'identifiant du dispositif terminal, que le premier réseau central stocke des données d'abonnement du dispositif terminal, dans lequel les données d'abonnement comprennent des informations de catégorie du dispositif terminal, et les informations de catégorie indiquent que le dispositif terminal appartient à une catégorie d'abonné au réseau public ou à une catégorie d'abonné au réseau dédié ; et
l'envoi, par le premier élément de réseau fonction de gestion d'accès et de mobilité, du message de demande de réacheminement au dispositif de réseau d'accès lors de la détermination, sur la base des informations de catégorie du dispositif terminal comprises dans les données d'abonnement, que le dispositif terminal n'appartient pas à une catégorie d'abonné du premier réseau central.

6. Procédé (200, 300, 700) selon la revendication 3, dans lequel le premier message comprend l'identifiant du dispositif terminal et les informations de localisation du dispositif terminal ; et l'envoi (204, 320, 704), par le premier élément de réseau de fonction de gestion d'accès et de mobilité, d'un message de demande de réacheminement au dispositif de réseau d'accès sur la base du premier message comprend :
la détermination, par le premier élément de réseau de fonction de gestion d'accès et de mobilité sur la base de l'identifiant du dispositif terminal, que le premier réseau central stocke des données d'abonnement du dispositif terminal ; et
l'envoi, par le premier élément de réseau de fonction de gestion d'accès et de mobilité, du message de demande de réacheminement au dispositif de réseau d'accès lorsque le premier élément de réseau de fonction de gestion d'accès et de mobilité détermine, sur la base des informations de localisation du dispositif terminal, que la TA dans les informations de localisation du dispositif terminal se trouve au sein d'une plage de zones de suivi du second réseau central ou que la cellule dans les informations de localisation se trouve au sein d'une plage de cellules du second réseau central.

7. Procédé (200, 300, 700) selon la revendication 3, dans lequel le premier message comprend l'identifiant du dispositif terminal et l'identifiant de la tranche de réseau demandée par le dispositif terminal ; et
l'envoi (204, 320, 704), par le premier élément de réseau de fonction de gestion d'accès et de mobilité, d'un message de demande de réacheminement au dispositif de réseau d'accès sur la base du premier message comprend :
la détermination, par le premier élément de réseau de fonction de gestion d'accès et de mobilité sur la base de l'identifiant du dispositif terminal, que le premier réseau central stocke des données d'abonnement du dispositif terminal ; et
l'envoi, par le premier élément de réseau de fonction de gestion d'accès et de mobilité, du message de demande de réacheminement au dispositif de réseau d'accès lorsque le premier élément de réseau de fonction de gestion d'accès et de mobilité détermine, sur la base de l'identifiant de la tranche de réseau demandée par le dispositif terminal, que la tranche de réseau est fournie par le second réseau central.

8. Procédé (200, 300, 700) selon la revendication 3, dans lequel le premier élément de réseau de fonction de gestion d'accès et de mobilité est en outre configuré avec une ou plusieurs d'une liste d'abonnés du second réseau central, d'une liste d'identifiants de zone de suivi du second réseau central et d'une liste d'identifiants globaux de nouvelles cellules radio du second réseau central.

9. Procédé (200, 300, 700) selon la revendication 8, dans lequel le premier élément de réseau de fonction de gestion d'accès et de mobilité est configuré avec la liste d'abonnés du second réseau central ; et
l'envoi (204, 320, 704), par le premier élément de réseau de fonction de gestion d'accès et de mobilité, d'un message de demande de réacheminement au dispositif de réseau d'accès sur la base du premier message comprend :
l'envoi, par le premier élément de réseau de fonction de gestion d'accès et de mobilité, du message de demande de réacheminement au dispositif du réseau d'accès lors de la détermination, sur la base de l'identifiant du dispositif terminal et de la liste d'abonnés du second réseau central, que le dispositif terminal est un abonné du second réseau central.

10. Procédé (200, 300, 700) selon la revendication 8, dans lequel le premier message comprend l'identifiant du dispositif terminal et les informations de localisation du dispositif terminal, et le premier élément de réseau de fonction de gestion d'accès et de mobilité est configuré avec la liste d'abonnés du second réseau central et la liste d'identifiants de zone de suivi du second réseau central ; et
l'envoi (204, 320, 704), par le premier élément de réseau de fonction de gestion d'accès et de mobilité, d'un message de demande de réacheminement au dispositif de réseau d'accès sur la base du premier message comprend :
la détermination, par le premier élément de réseau de fonction de gestion d'accès et de mobilité sur la base de l'identifiant du dispositif terminal, que le premier réseau central stocke des données d'abonnement du dispositif terminal, et la détermination, sur la base de l'identifiant du dispositif terminal et de la liste d'abonnés du second réseau central, que le dispositif terminal est un abonné du second réseau central ; et
l'envoi, par le premier élément de réseau de fonction de gestion d'accès et de mobilité, du message de demande de réacheminement au dispositif de réseau d'accès lorsque la zone de suivi dans les informations de localisation du dispositif terminal est comprise dans la liste d'identifiants de zone de suivi du second réseau central.

11. Procédé (200, 300, 700) selon la revendication 8, dans lequel le premier message comprend l'identifiant du dispositif terminal et les informations de localisation du dispositif terminal, et le premier élément de réseau de fonction de gestion d'accès et de mobilité est configuré avec la liste d'identifiants de zone de suivi du second réseau central et/ou la liste d'identifiants globaux de nouvelles cellules radio du second réseau central ; et
l'envoi (204, 320, 704), par le premier élément de réseau de fonction de gestion d'accès et de mobilité, d'un message de demande de réacheminement au dispositif de réseau d'accès sur la base du premier message comprend :
la détermination, par le premier élément de réseau de fonction de gestion d'accès et de mobilité sur la base de l'identifiant du dispositif terminal, que le premier réseau central ne stocke pas de données d'abonnement du dispositif terminal ; et l'envoi, par le premier élément de réseau de fonction de gestion d'accès et de mobilité, du message de demande de réacheminement au dispositif de réseau d'accès lorsque la zone de suivi dans les informations de localisation du dispositif terminal est comprise dans la liste d'identifiants de zone de suivi du second réseau central, ou lorsque la cellule dans les informations de localisation du dispositif terminal est comprise dans la liste d'identifiants globaux de nouvelles cellules radio du second réseau central.

12. Procédé (200, 300, 700) selon l'une quelconque des revendications 1 à 3, dans lequel l'envoi (204, 320, 704), par le premier élément de réseau de fonction de gestion d'accès et de mobilité, d'un message de demande de réacheminement au dispositif de réseau d'accès sur la base du premier message comprend :
l'envoi (403), par le premier élément de réseau de fonction de gestion d'accès et de mobilité, d'un message de demande de politique d'accès à un élément de réseau de service de commande de politique d'accès et de mobilité sur la base du premier message, dans lequel le message de demande de politique d'accès est utilisé pour demander d'obtenir une décision d'accès à un réseau par le dispositif terminal ;
la réception (405), par le premier élément de réseau de fonction de gestion d'accès et de mobilité, d'un message de réponse de politique d'accès provenant de l'élément de réseau de service de commande de politique d'accès et de mobilité, dans lequel le message de réponse de politique d'accès indique d'autoriser le dispositif terminal à accéder au second réseau central ; et
l'envoi, par le premier élément de réseau de fonction de gestion d'accès et de mobilité, du message de demande de réacheminement au dispositif de réseau d'accès sur la base du message de réponse de politique d'accès ;
dans lequel le message de réponse de politique d'accès contient une ou plusieurs des informations suivantes :
l'identifiant du second réseau central ;
l'identifiant de la tranche de réseau du second réseau central ; l'identifiant d'ensemble d'éléments de réseau de fonction de gestion d'accès et de mobilité, dans lequel l'identifiant d'ensemble d'éléments de réseau de fonction de gestion d'accès et de mobilité est utilisé par le dispositif de réseau d'accès pour déterminer le second réseau central ;
une valeur de cause de rejet, dans lequel la valeur de cause de rejet indique au dispositif terminal de rechercher une cellule dans une TA autre que la TA actuelle pour tenter d'accéder à un réseau ; et
des informations de tranche de réseau mises à jour, dans lequel les informations de tranche de réseau mises à jour comprennent des informations à propos de la tranche de réseau du second réseau central.

13. Procédé (200, 300, 700) selon l'une quelconque des revendications 3 à 12, dans lequel l'identifiant du dispositif terminal comprend un identifiant caché d'abonnement, l'identifiant caché d'abonnement comprend un identifiant d'acheminement et un identifiant de clé publique de réseau domestique, l'identifiant d'acheminement et/ou l'identifiant de clé publique de réseau domestique indiquent/indique une catégorie du dispositif terminal, et la catégorie du dispositif terminal indique que le dispositif terminal appartient à la catégorie d'abonné au réseau public ou à la catégorie d'abonné au réseau dédié.

14. Procédé (200, 300, 700) selon l'une quelconque des revendications 8 à 11, dans lequel la liste d'abonnés du second réseau central comprend un segment de numéro d'un abonné du second réseau central, et le segment de numéro de l'abonné comprend un ou plusieurs des éléments suivants :
un segment de numéro d'identifiant permanent d'abonnement, un segment de numéro d'identifiant d'abonné mobile international, un segment de numéro d'identifiant d'acheminement dans un identifiant caché d'abonnement ou un segment de numéro d'identifiant de clé publique de réseau domestique dans l'identifiant caché d'abonnement.

15. Appareil de communication (10), comprenant au moins un processeur (11), dans lequel l'au moins un processeur est couplé à au moins une mémoire (12), et l'au moins un processeur est configuré pour exécuter un programme informatique ou des instructions stockées dans l'au moins une mémoire, pour amener l'appareil de communication à réaliser le procédé selon l'une quelconque des revendications 1 à 14.
